# EUROPEAN PATENT SPECIFICATION

(11) **EP 4 116 027 B1**
(45) Date of publication and mention of the grant of the patent: **14.08.2024**
(21) Application number: 21784982.7
(22) Date of filing: 04.03.2021
(51) Int. Cl.: B23K 26/03, B23K 26/21, B23K 31/12

(54) **LASER PROCESSING DEVICE WITH A MONITORING DEVICE, AND LASER PROCESSING MONITORING METHOD**
LASERBEARBEITUNGVORRICHTUNG MIT EINER ÜBERWACHUNGSVORRICHTUNG, UND LASERBEARBEITUNGSÜBERWACHUNGSVERFAHREN
DISPOSITIF DE TRAITEMENT LASER AVEC UN DISPOSITIF DE SURVEILLANCE, ET PROCÉDÉ DE SURVEILLANCE DE TRAITEMENT LASER

(30) Priority: 07.04.2020 JP 2020068853
(43) Date of publication of application: 11.01.2023
(73) Proprietor: Amada Weld Tech Co., Ltd., Isehara-shi Kanagawa 259-1196 (JP); Amada Co., Ltd., Isehara-shi, Kanagawa 259-1196 (JP)
(72) Inventor: YANASE, Atsushi, Isehara-shi, Kanagawa 259-1196 (JP); NISHIZAKI, Yusuke, Isehara-shi, Kanagawa 259-1196 (JP)
(74) Representative: Grünecker Patent- und Rechtsanwälte PartG mbB
(86) International application number: PCT/JP2021/008475
(87) International publication number: WO 2021/205789

(56) References cited:
- CN-A- 110 231 610
- JP-A- 2004 132 793
- JP-A- 2005 254 314
- JP-A- 2007 030 032
- JP-A- 2014 015 352
- JP-A- H11 197 863
- US-A1- 2011 031 410
- US-A1- 2014 346 150

## Description

The present invention relates to a laser processing device, and a laser processing monitoring method according to the preamble of claims 1 and 15 respectively (see for example US 2014/346150 A1).

### Background Art

Conventionally, in a laser processing device, a technology for determining the quality of laser processing has been used. Specifically, a laser processing device has a photodetector or an optical sensor incorporated into a processing head that irradiates workpiece with a laser beam. A beam to be measured which is generated or reflected near a processing point of the workpiece is received by the optical sensor through an optical system in the processing head. The laser processing device performs a predetermined signal process for an electric signal (sensor output signal) obtained by photoelectric conversion of the optical sensor, so that the quality of the laser processing is determined.

In this kind of laser processing monitoring technology, not only hardware and software are simpler compared to a technique of image analysis of a processing situation near the processing point using an imaging device, but also qualitative improvement of monitoring is achieved depending on ingenuity of a signal process technology. For example, in laser welding, it is also possible to precisely monitor or analyze subtle behavior and change of a weld part.

### Citation List

### Patent Literature

Patent Literature 1: Japanese Patent Application Laid-open Publication No. 2007-30032

### Summary

However, while the present inventors promote the research and development of the laser processing monitoring technology as described above, an error in a photoelectric conversion characteristic of the optical sensor becomes a major hindrance in improvement of monitoring performance. That is, the photoelectric conversion characteristic of a photodiode used in the optical sensor inevitably changes over time and, furthermore, is also influenced by an environmental condition such as an ambient temperature. When the photoelectric conversion characteristic of the photodiode changes, even when a beam to be measured having the same light intensity is received from the workpiece side, a value of a sensor output signal obtained after photoelectric conversion of the beam. Therefore, even when the performance of a digital signal process technology is made higher, it is not possible to monitor and analyze laser processing precisely, and it is not possible to determine the quality accurately.

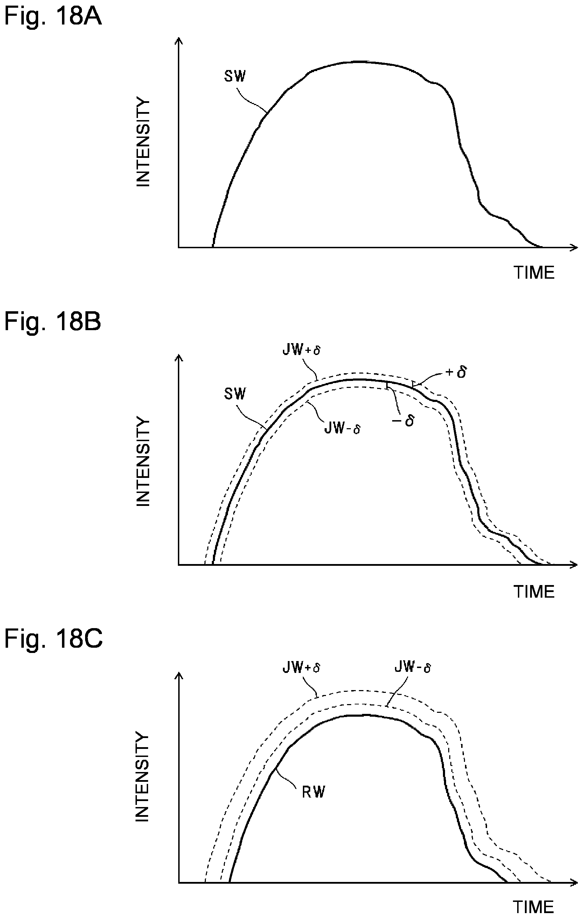

In order to cope with this problem, the present inventors use the following calibration method. First, at the time of shipment or setting of the laser processing device, as part of initialization, a reference workpiece sample is irradiated with a laser beam with reference power. Then, a waveform of a sensor output signal obtained from the optical sensor in the processing head is acquired as a reference waveform SW such as a waveform illustrated in Figure 18A.

As illustrated in Figure 18B, upper and lower limit value envelopes JW + δ and JW - δ that are offset up and down by a certain allowable range (±δ) from the value of the reference waveform SW in the whole interval (or partial interval) of the reference waveform SW are set. The allowable range ±δ illustrated in the figure is enlarged for ease of illustration, but in practice, the envelope setting is performed in an infinitely small range to enhance calibration accuracy.

When the optical sensor is calibrated, a waveform RW of a sensor output signal obtained by irradiating the same workpiece sample with a laser beam with the same reference power is displayed on a monitor screen (maintenance screen) together with the upper and lower limit value envelopes JW + δ and JW - δ. Then, the waveform RW of the sensor output signal protrudes outside the upper and lower limit value envelopes JW + δ and JW - δ, for example, as illustrated in Figure 18C, the on-site person operates screen input or the like to adjust the gain of sensor output such that the waveform RW falls within the inside of the upper and lower limit value envelopes JW + δ and JW - δ (allowable range).

However, it is found that the above optical sensor calibration method is not a valid solution. That is, a laser oscillation unit and the workpiece sample involve a radiation source of a test beam received by the optical sensor during calibration, and a laser optical system is interposed in an optical path of the test beam. Therefore, an error between the reference waveform SW in initial acquisition and the waveform RW of the sensor output signal in current acquisition includes not only the variation of the photoelectric conversion characteristic of the optical sensor, but also the variation of the optical characteristic or the physical characteristic of an involving element or an interposing element thereof. Therefore, it is not possible to perform calibration focused on the photoelectric conversion characteristic of the optical sensor. Furthermore, there is no guarantee that the light intensity of the test beam for calibration is always constant. Therefore, it is not possible to correct the error of the photoelectric conversion characteristic of the optical sensor correctly. In addition, in order to involve the laser oscillation unit and the workpiece sample in the calibration of the optical sensor, calibration work is troublesome and large-scale.

Furthermore, the optical sensor calibration method described above is a method for performing calibration based on relative comparison between the reference waveform SW unique to a device and the waveform RW of the sensor output signal in current acquisition, and a calibration reference value of the optical sensor varies per device. Therefore, a difference in monitoring performance and accuracy between an actually indicated value and a value to be originally indicated causes variation as the individual difference of the laser processing device of the same model using the optical sensor of the same product. That is, the instrument error between laser processing devices of the same model varies among the same model, and therefore it is not possible to perform the same quality evaluation under the setting of the same processing condition.

A laser processing device according to a first aspect of the present invention is defined in claim 1.

Further embodiments of this laser processing device are defined in the corresponding dependent claims.

According to the present invention, the optical sensor for monitoring laser processing is calibrated using the reference beam source built in the processing head, and this reference beam source is calibrated through the optical measuring instrument built in the device, and therefore even when the electrical-to-optical conversion characteristic of the reference beam source changes over time or fluctuates due to an environmental condition, it is possible to correct this timely and appropriately. Additionally, even when the photoelectric conversion characteristic of the optical sensor changes over time or fluctuates due to an environmental condition, it is possible to correct this timely and appropriately.

A laser processing monitoring method according to a second aspect of the present invention is defined in claim 15.

Further embodiments are defined in the corresponding dependent claims.

In the laser processing monitoring method according to this second aspect of the present invention, when laser processing is monitored, the first optical path is set in the sensor unit and the beam to be measured is made incident on the optical sensor from the workpiece side. Additionally, when the optical sensor is calibrated, the second optical path is set in the sensor unit, and the reference beam from the reference beam source is made incident on the optical sensor. Then, when the reference beam source is calibrated, the reference beam from the reference beam source is made incident on the beam receiver of the optical measuring instrument. Consequently, even when the electrical-to-optical conversion characteristic of the reference beam source changes over time or fluctuates due to an environmental condition, it is possible to correct this timely and appropriately. Additionally, even when the photoelectric conversion characteristic of the optical sensor changes over time or fluctuates due to an environmental condition, it is possible to correct this timely and appropriately.

According to the laser processing device and the laser processing monitoring method according to the first and second aspects, respectively, of the present invention, with the above configuration and operation, it is possible to improve the accuracy, reproducibility and workability of calibration for the optical sensor used for monitoring laser processing, and improve monitoring performance.

Further according to the laser processing device according to the first aspect of the present invention, with the above configuration and operation, it is possible to perform qualified quality determination for laser processing.

### Brief Description of Drawings

[Figure 1] Figure 1 is a block diagram illustrating an entire configuration of a laser processing device including a laser processing monitoring device according to the present invention.
[Figure 2] Figure 2 is a graph illustrating radiation spectrum distribution of black bodies.
[Figure 3] Figure 3 is a diagram illustrating spectrum distribution of infrared ray intensity emitted from a molten part by irradiating stainless steel with a pulse laser beam.
[Figure 4] Figure 4 is a diagram illustrating a state of Experiment 1 for verifying a monitoring function of the laser processing monitor unit according to the embodiment and a monitoring display waveform of a sensor output signal acquired by the experiment.
[Figure 5] Figure 5 is a diagram illustrating a state of Experiment 2 for verifying the above monitoring function and a monitoring display waveform of a sensor output signal acquired by the experiment.
[Figure 6] Figure 6 is a diagram illustrating a state of Experiment 3 for verifying the above monitoring function and a monitoring display waveform of a sensor output signal acquired by the experiment.
[Figure 7A] Figure 7A is a sectional view illustrating a configuration example of the reference beam source according to the embodiment.
[Figure 7B] Figure 7B is a sectional view illustrating another configuration example of the reference beam source according to the embodiment.
[Figure 8] Figure 8 is a diagram schematically illustrating a state in which a folding mirror of an optical path switching unit is switched to a second position in order to select a second optical path in a calibration unit of the embodiment.
[Figure 9] Figure 9 is a diagram schematically illustrating a state in which the folding mirror of the optical path switching unit is switched to a third position in order to select a third optical path in the above calibration unit.
[Figure 10] Figure 10 is a perspective view illustrating appearance of a sensor unit incorporating an optical path switching unit of a preferred configuration example.
[Figure 11] Figure 11 is a side view of the sensor unit in Figure 10.
[Figure 12] Figure 12 is a perspective view of the optical path switching unit incorporated in the sensor unit of Figure 10, the optical path switching unit being viewed from a certain angle.
[Figure 13] Figure 13 is a perspective view of the optical path switching unit viewed from another angle.
[Figure 14] Figure 14 is a side view of the optical path switching unit viewed from the reference beam source side.
[Figure 15] Figure 15 is a sectional view taken along the line A-A of Figure 14.
[Figure 16A] Figure 16A is a longitudinal sectional view of a principal part illustrating positional relation of each unit of the optical path switching unit in a first mode of the calibration unit.
[Figure 16B] Figure 16B is a longitudinal sectional view of a principal part illustrating positional relation of each unit of the optical path switching unit in a second mode.
[Figure 16C] Figure 16C is a transverse sectional view of a principal part illustrating positional relation of each unit of the optical path switching unit in a third mode.
[Figure 17] Figure 17 is a diagram illustrating a modification of the laser processing device not covered by the present invention.
[Figure 18A] Figure 18A is a diagram schematically illustrating a monitor screen in a first stage of an optical sensor calibration method of a conventional technology.
[Figure 18B] Figure 18B is a diagram schematically illustrating a monitor screen in a second stage of an optical sensor calibration method of a conventional technology.
[Figure 18C] Figure 18C is a diagram schematically illustrating a monitor screen in a third stage of an optical sensor calibration method of a conventional technology.

### Description of Embodiment

Hereinafter, a preferred embodiment of the present invention will be described with reference to the attached drawings.

### [Configuration of Entire Laser Processing Device]

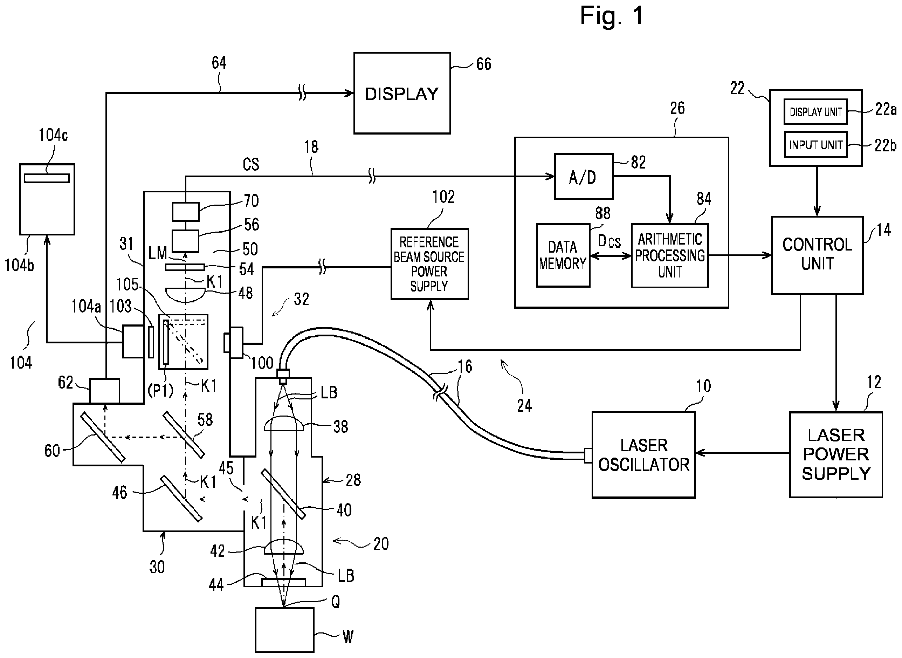

Figure 1 illustrates an entire configuration of a laser processing device according to an embodiment of the present invention, including a laser processing monitoring device. This laser processing device is, for example, a laser processing machine that irradiates a workpiece W with a high output CW laser beam or a pulse laser beam and melts a processing point Q of the workpiece W with laser energy to perform desired laser melting processing. This laser processing device has a laser oscillator 10, a laser power supply 12, a control unit 14, an optical fiber cable 16, an electric cable 18, a processing head 20, an operation panel 22, and a laser processing monitor unit (laser processing monitoring device) 24.

In this laser processing device, the laser oscillator 10, the laser power supply 12, the control unit 14, and the operation panel 22 are usually disposed in one place or close together to form a main body of the device. On the other hand, the processing head 20 is configured as a separate and independent unit from the main body of the device, and is disposed at any processing place within an area according to the length of the optical fiber cable 16.

The laser processing monitor unit 24 includes the control unit 14, the operation panel 22, a sensor signal processing unit 26 and a sensor unit 30 as a basic configuration for a main function, that is, a monitoring function, and includes a reference beam source 100, a reference beam source power supply 102, an optical measuring instrument 104 and an optical path switching unit 105 as a calibration unit 32 for calibrating an optical sensor 50 incorporated in the sensor unit 30.

The laser oscillator 10 is composed of, for example, a YAG laser, a fiber laser, or a semiconductor laser. For example, when laser spot welding is applied to the workpiece W, the laser oscillator 10 receives supply of excitation power from the laser power supply 12 under the control of the control unit 14 to excite an internal medium, and oscillates and outputs laser beams LB of pulses with wavelengths unique to the medium. The laser beams LB oscillated and output by the laser oscillator 10 are transmitted to the processing head 20 through the optical fiber cable 16.

The processing head 20 has an emission unit 28 which is a head body, and a sensor unit 30 integrally or detachably connected to the emission unit 28 through a unit connection opening 45. The emission unit 28 has a cylindrical housing. An upper end of the housing of the emission unit 28 is connected to the optical fiber cable 16 from the laser oscillator 10, and a laser emission port of a lower end of the housing of the emission unit 28 is directed to the workpiece W directly under the laser emission port. In the housing of the emission unit 28, a collimating lens 38, a dichroic mirror 40, a focusing lens 42 and a protective glass 44 are arranged in a vertical line from a top to a bottom, as the laser optical system. Herein, the protective glass 44 is mounted on the laser emission port. The dichroic mirror 40 is disposed so as to be inclined obliquely at 45° towards the unit connection opening 45. The dichroic mirror 40 is coated with a dielectric multilayer film that transmits the laser beams LB from the optical fiber cable 16 and reflects a beam to be measured and a visible ray from the vicinity of the processing point Q of the workpiece W.

During laser processing, the laser beams LB propagating through the optical fiber cable 16 are emitted vertically downward at a constant flare angle from an end surface of the optical fiber cable 16 within the emission unit 28. The laser beams LB pass through the collimating lens 38 to become parallel beams, pass through the dichroic mirror 40 to be focused through the focusing lens 42 and the protective glass 44, and are incident on the processing point Q of the workpiece W. Then, laser energy of the laser beams LB melts and solidifies the vicinity of the processing point Q to form a weld nugget and further a weld joint. The weld joint is arbitrary, for example, a butt joint, a T-shaped joint, an L-shaped joint, a lap joint, or the like, and is selected by a user.

The sensor unit 30 also has an integral or assembled cylindrical housing. In the housing of the sensor unit 30, the optical sensor 50 is provided in an upper end of the housing, a folding mirror 46, a dichroic mirror 58 and a condenser lens 48 are arranged in a vertical line from a bottom to a top, as a monitor optical system directly below the optical sensor 50. Herein, the folding mirror 46 is disposed so as to be inclined obliquely at 45° at the same height as the unit connection opening 45. The optical path switching unit 105 of the calibration unit 32 is provided between the dichroic mirror 58 and the condenser lens 48.

The dichroic mirror 58 is provided in order to monitor and photograph the vicinity of the processing point Q of the workpiece W. The dichroic mirror 58 is disposed so as to be inclined obliquely at 45° at the same height as a folding mirror 60 provided on the lateral side of the dichroic mirror 58. This dichroic mirror 58 is coated with a dielectric multilayer film that transmits a beam to be measured and reflects a visible ray. The folding mirror 60 is also disposed so as to be inclined obliquely at 45°, and is mounted with a CCD camera 62 directly above the folding mirror 60. An image signal output by the CCD camera 62 is transmitted to a display device 66 through an electric cable 64. The display device 66 is generally disposed on the device main body side. Although not illustrated, an optical system that irradiates the vicinity of the processing point Q of the workpiece W with a guide beam of the visible ray can be incorporated in the sensor unit 30.

The optical sensor 50 of this embodiment includes, for example, a photodiode 56 as a photoelectric transducer. The optical sensor 50 includes, in front of (below) the photodiode 56, a wavelength filter or a band pass filter 54 which transmits only beams LM each having a wavelength in a specific band and blocks other beams. Behind the optical sensor 50, a substrate of an amplification and output circuit 70 is provided.

At the time of the laser processing, electromagnetic waves (beams) having a broadband wavelength is emitted from the vicinity of the processing point Q of the workpiece W which is irradiated with the laser beams LB by the emission unit 28. In vertically upward electromagnetic waves among the electromagnetic waves emitted from the workpiece W, beams that pass through the focusing lens 42 in the emission unit 28 and are reflected horizontally by the dichroic mirror 40 passing through the unit connection opening 45 to be guided into the sensor unit 30. Among the beams guided into the sensor unit 30, a beam reflected vertically upward by the folding mirror 46 and then transmitted through the dichroic mirror 58 is incident on the band pass filter 54 through the optical path switching unit 105 and the condenser lens 48. Then, the beams LM having a wavelength component in a predetermined band selected by the band pass filter 54 are focused and incident on a light receiving surface of the photodiode 56. In this case, the optical path switching unit 105 is switched such that the processing point Q of the workpiece W and the optical sensor 50 are optically connected by a first optical path K1 indicated by a dashed line in Figure 1.

Among beams that pass from the emission unit 28 through the unit connection opening 45 to enter the sensor unit 30, a visible ray is folded vertically upwards by the folding mirror 46. The folded visible ray is horizontally reflected by the dichroic mirror 58 as illustrated by a broken line in Figure 1, folded vertically upward by the folding mirror 60, and is incident on an imaging surface of the CCD camera 62. A condenser lens (not illustrated) may be provided in front of the CCD camera 62. An output signal (video signal) of the CCD camera 62 is sent to the display device 66, and an image of the vicinity of the processing point Q of the workpiece W is displayed on a screen of the display device 66.

In the optical sensor 50, a wavelength band in which a beam is transmitted through the band pass filter 54 is preferably set to the most suitable band for grasping the influence of a predetermined factor on a welding characteristic of the vicinity of the processing point for a plurality of types of materials and a variety of processing forms to be selected for the workpiece W as the intensity or change of the radiant energy, in comprehensive consideration of sensitivity, versatility, cost, and the like, in monitoring method using a single photodiode 56.

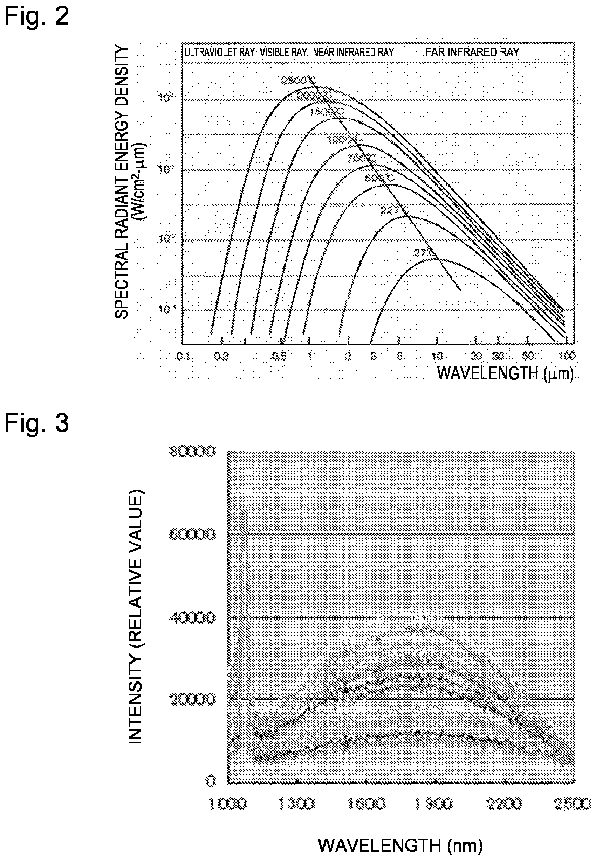

In this regard, well-known black body radiation spectrum distribution illustrated in Figure 2 can be favorably used. As illustrated in a graph of Figure 2, there is a certain relation between the spectrum of an electromagnetic wave emitted by a black body and the surface temperature. When the temperature of an object is high, the peak of radiant energy shifts to a short wavelength, and when the temperature of an object is low, the peak of radiant energy shifts to a long wavelength, and the peak radiant energy changes exponentially with temperature change. According to this graph, the wavelength of a peak point of energy density emitted from a black body with a temperature of 1500°C is about 1800 nm.

On the other hand, Figure 3 illustrates a result obtained by measuring, from various angular positions with respect to the processing point, the intensity (relative count value) of a beam of 1000 nm or more detected when iron-based stainless steel (melting point is about 1500°C) is irradiated with a laser beam, and analyzing the spectrum distribution with a spectrum analyzer by the present inventors. A display waveform of a spectrum analyzer illustrates each peak value as a relative intensity without distinguishing over time the intensity of the detected beam of 1000 nm or more. Although the intensity of the whole of the indicated waveform varies depending on each angular position at the time of measurement, a constant characteristic is obtained. According to this, the intensity (radiant energy density) of infrared rays emitted from a molten part of the stainless steel has a steep mountain-shaped characteristic over a band of about 1000 nm to 1100 nm and a broad mountain-shaped characteristic over a band of about 1200 nm to 2500 nm. When focusing on the latter broad mountain-shaped characteristic, the wavelength of the peak point is about 1800 nm, and generally approximates the wavelength (about 1800 nm) of the peak point of the energy density emitted from the black body with a temperature of 1500°C.

From this fact, it is possible to determine a practical optimal wavelength band in laser processing monitoring method using the single photodiode 56, by using, as an index, a melting point of each of a plurality of types of metals that can be assumed as the material of the workpiece W, with reference to the graph in Figure 2. As an example, the respective melting points of an iron-based metal, copper-based metal, and an aluminum-based metal which are the main materials for laser melting processing are around 1500°C, around 1000°C, and around 600°C, and therefore in Figure 2, the band of 1.3 µm (1300 nm) to 2.5 µm (2500 nm) may be used as the wavelength band that is photoelectrically converted by the optical sensor 50.

Referring again to Figure 1, a sensor output signal CS output from the amplification and output circuit 70 in the sensor unit 30 is transmitted to the sensor signal processing unit 26 on the device main body side via the electric cable 18. The sensor output signal CS is converted into a digital signal by an A/D converter 82 and a digital signal processing is performed in the arithmetic processing unit 84.

The arithmetic processing unit 84 is composed of a hardware or middleware arithmetic processing device, preferably an FPGA (Feed Programmable Gate Array), capable of performing specific arithmetic processing at high speed. The arithmetic processing unit 84 converts an instantaneous voltage value of the sensor output signal CS into a count value (relative value) representing the intensity of a radiated beam by using a data memory 88, and generates the converted value as digital waveform data DCS. The generated waveform data DCS is stored in the data memory 88. The arithmetic processing unit 84 displays a waveform of the sensor output signal CS on a display of a display unit 22a of the operation panel 22 via the control unit 14 based on the waveform data DCS. Alternatively, the arithmetic processing unit 84 also executes quality determination processing described later, and displays a determination result together with the waveform of the sensor output signal CS. The control unit 14 converts the waveform data DCS and the determination result data given from the arithmetic processing unit 84 into a video signal, and displays an image of the waveform of the sensor output signal CS and the determination result information and the like on the display of the display unit 22a of the operation panel 22.

Thus, according to the laser processing monitor unit 24, the radiated beam (infrared rays) when the processing point of the workpiece reaches a molten state is an object to be monitored. Then, instead of conversion of the radiated beam into temperature, change in the amount of the radiated beam during processing is converted into an instantaneous integrated value or a count value in a specific band and is displayed, so that the processing status of the workpiece is visualized as a waveform.

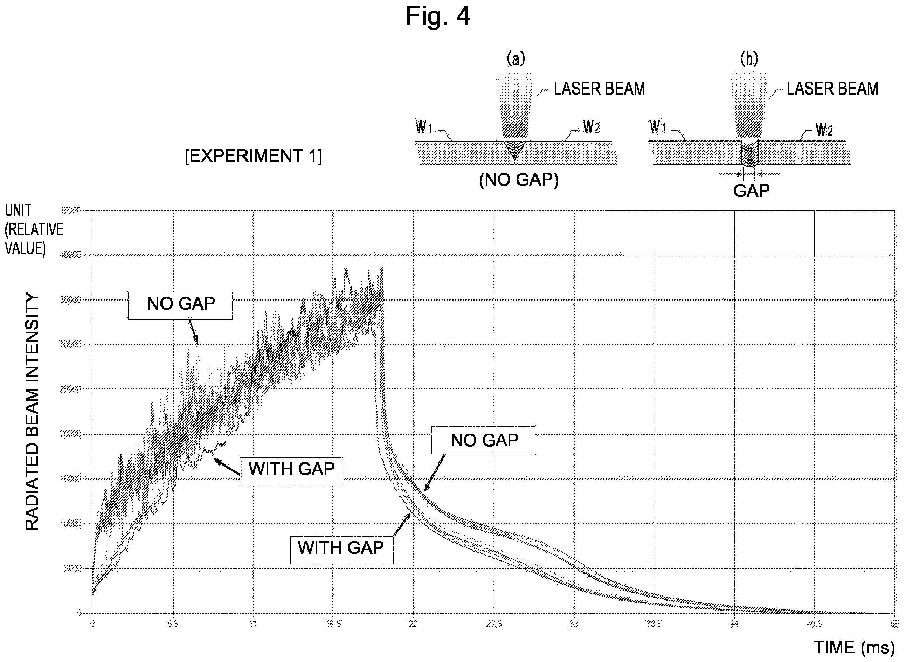

The operation panel 22 has, for example, the display unit 22a composed of a liquid crystal display, and a keyboard or touch panel type input unit 22b, and displays a setting screen, a monitor screen, a maintenance screen, or the like under display control of the control unit 14. For example, as one of the setting screens, a laser output waveform corresponding to a setting condition of the laser beam LB is displayed on the display of the display unit 22a. In addition, as one of the monitor screens, for example, as illustrated in Figure 4 to Figure 6 described below, a waveform of a very fine sensor output signal acquired without loss of intensity variation in the laser processing monitor unit 24 is visualized and displayed on the display of the display unit 22a. Furthermore, as one of the maintenance screens, gain adjustment (digital gain adjustment) for the output of an optical sensor 50 can be performed on the screen.

### [Monitoring Function of Laser Processing monitor Unit]

In order to verify the monitoring function of the laser processing monitor unit 24 in this embodiment, the present inventors conducted Experiments 1, 2, and 3 as illustrated in Figure 4 to Figure 6, respectively. A waveform illustrated in each figure is a waveform of the sensor output signal CS displayed on the monitor screen of the display unit 22a of the operation panel 22. A finely zigzagging portion in the waveform indicates that metal melting occurs in the vicinity of the processing point, and radiated beam disturbances from a wave surface of a molten pool are detected. A point at which the waveform, which increases upwards on the time axis, reaches a peak is a point at which the irradiation with the laser beams LB is stopped, and the waveform falls from this point.

In Experiment 1 (Figure 4), two stainless steel plates (SUS304) W1 and W2 with a thickness of 1.0 mm were arranged side by side to form a workpiece W, and butt welding was performed using a pulse laser beam. In this butt welding, the laser beam spot diameter was 0.3 mm, the laser output was 500 W, and the pulse width was 20 ms. Then, in a case (a) where there is no gap (clearance) between W1 and W2 of the workpiece and in a case (b) where there is a gap of 0.09 mm, which is 30% of a spot diameter of 0.3 mm, it was verified how the influence of the gap (specific factor) on the processing characteristic of the butt welding of the workpiece (W1, W2) can be monitored and analyzed in the laser processing monitor unit 24.

The waveform of the case (a) where there is no gap in a butted part and the waveform of the case (b) where there is a gap in a butted part are compared. The former (a) has a characteristic that a detection starting point is high immediately after the start of the rise of the waveform and the fall of the waveform is relatively gentle. On the other hand, the latter (b) has a characteristic that the detection starting point immediately after the beginning of the rise of the waveform is low and the fall of the waveform is relatively sharp. This phenomenon indicates the followings. That is, in the case (b) where there is a gap in the butted part, a laser beam is also incident on a part (gap) where there is no metal. Therefore, due to the presence of the gap with respect to the spot diameter at the irradiation point, a phenomenon that an amount of molten metal, which forms a molten pool, decreases occurs. A difference in the molten metal amount also appears as a difference in the radiated beam amount in the radiated beam detected in the vicinity of the molten pool, and the detection starting point immediately after the rise of the waveform becomes low. In addition, the molten metal amount decreases due to the phenomenon that vaporized metal flies together with a transmitted beam that passes through the gap. Therefore, in a case where there is a gap, the fall of the waveform is detected quickly.

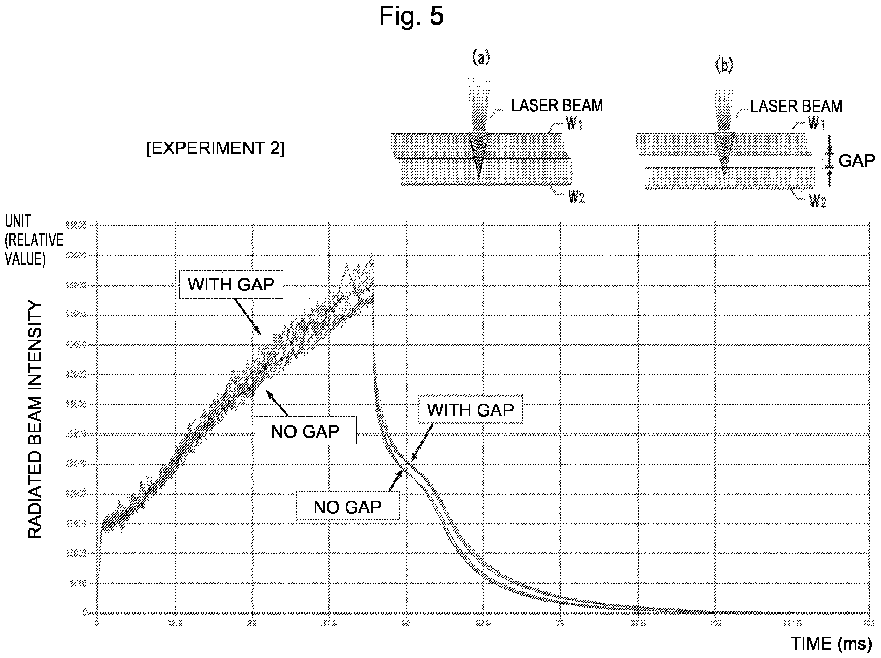

In Experiment 2 (Figure 5), two stainless steel plates (SUS304) W1 and W2 with a thickness of 0.3 mm were stacked to form a workpiece W, and lap welding was performed using a pulse laser beam. In this lap welding, the laser beam spot diameter was 0.3 mm, the laser output was 500 W, and the pulse width was 45 ms. Then, in a case (a) where there is no gap in the workpiece (between W1 and W2) and in a case (b) where there is a gap of 0.06 mm, which is 20% of a spot diameter of 0.3 mm between the workpiece materials (W1 and W2), it was verified how the influence of the gap (specific factor) on the processing characteristic of the lap welding of the workpiece (W1, W2) can be monitored and analyzed.

The case (b) where there is a gap of 0.06 mm in this lap welding and the case (a) where there is no gap in this lap welding are compared. It was difficult to distinguish the intensity change of a radiated beam in the rising part of the waveform. However, in the falling portion of the waveform, that is, after the pulse laser irradiation was stopped, the fall of the waveform in the case (b) of the waveform with a gap was more gentle than that in the case (a) of the waveform with no gap. This phenomenon indicates the followings. That is, in the lap welding, in the case (a) where there is no gap in the workpiece material, it is considered that the irradiation laser beam melts and penetrates the first metal W1, and thereafter melts the second metal W2 as it is. On the other hand, in the case (b) where there is a small gap in the workpiece materials, the heat transfer in the workpiece material is delayed due to the influence of an air layer existing in the gap, compared to the case (a) where there is no gap between the metal layers, so that it is detected that the fall of the waveform is gentle.

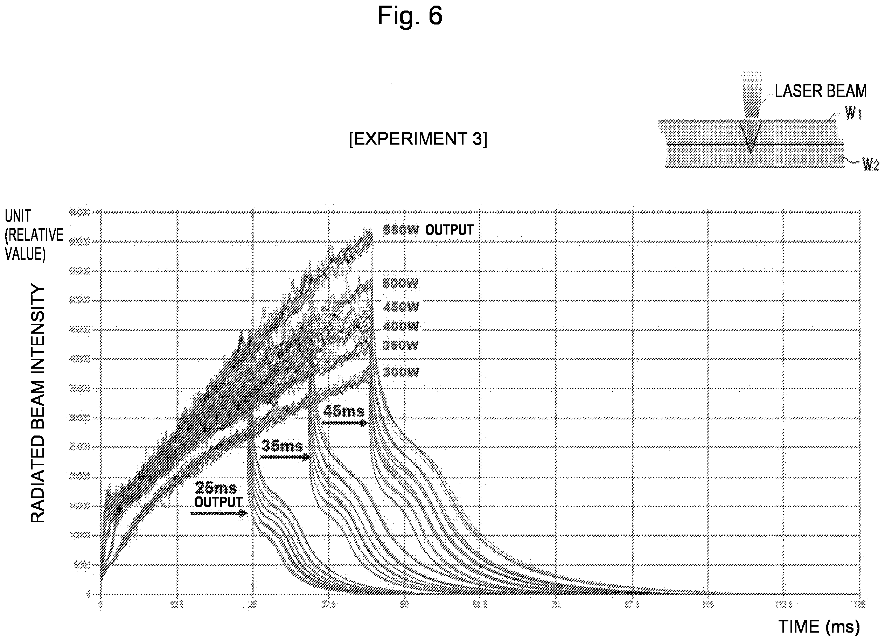

In Experiment 3 (Figure 6), two plate materials W1 and W2 of the stainless steel SUS304 with a thickness of 0.3 mm were stacked with no gap to form a workpiece W, and lap welding was performed using a pulse laser beam. In this lap welding, the laser beam spot diameter was 0.3 mm, the laser output and the pulse width were parameters. That is, for the laser output, six stage values from 300 W to 550 W were selected in 50 W increments, and for the pulse width, three stage values of 25 ms, 35 ms, and 45 ms were selected. Then, it was verified how the influence of the laser output (first specific factor) and the pulse width (second specific factor) on the processing characteristic of the lap welding of workpiece (W1 and W2) can be monitored and analyzed.

From Figure 6, it is found that as the laser output setting value of the laser beam LB increases, the radiated beam intensity indicated by the waveform of the sensor output signal CS also increases proportionally, and as the laser output setting value of the laser beam LB increases, the fall of the waveform of the sensor output signal CS is delayed. Furthermore, it can be seen that the larger the pulse width, the higher the radiated beam intensity (especially the maximum peak value immediately before the fall) displayed by the waveform of the sensor output signal. Consequently, the radiated beam from the workpiece in the laser processing is accurately detected in units of tens of watts and in units of 10 ms.

As described above, according to the laser processing monitor unit 24, monitoring and analysis of the action of the laser beam LB in the laser processing, monitoring and analysis of the degree of influence of a predetermined factor related to the processing state or the processing quality of the laser processing, quality determination of the laser welding processing can be simply and precisely performed from the waveform characteristic of the sensor output signal CS displayed on the monitor screen of the operation panel 22 during the laser processing.

### [Configuration and Operation of Calibration Unit]

In the laser processing monitor unit 24, a photodetector or an optical sensor 50 is incorporated into the sensor unit 30 built into the processing head 20. However, the photoelectric conversion characteristic of the photodiode 56 that constitutes this optical sensor 50 not only inevitably changes over time, but also depends on an environmental condition such as an ambient temperature. When the photoelectric conversion characteristic of the photodiode 56 changes, even when a beam LM to be measured having the same light intensity is received from the workpiece W side, a value of an analog sensor output signal CS obtained by photoelectric conversion changes. Therefore, even when the sensor signal processing unit 26 has higher performance, the accuracy and the reliability of the waveform information of the sensor output signal CS provided on the monitor screen are low, and the detailed monitoring and analysis of the laser processing and the appropriate quality determination is not possible.

In order to cope with this problem, the laser processing monitor unit 24 includes the calibration unit 32 that enables highly accurate and reliable calibration for change over time in the photoelectric conversion characteristic of the sensor 50 and variation according to an environmental condition. Hereinafter, the configuration and the operation of the calibration unit 32 will be described in detail.

As illustrated in Figure 1, the calibration unit 32 includes the reference beam source 100, the reference beam source power supply 102, the optical measuring instrument 104 and the optical path switching unit 105 provided inside and outside the sensor unit 30.

The reference beam source 100 is a beam source that generates infrared rays containing the wavelength of beam LM to be measured, and preferably has radiation characteristics close to the radiation spectrum distribution of the ideal black body in Figure 2.

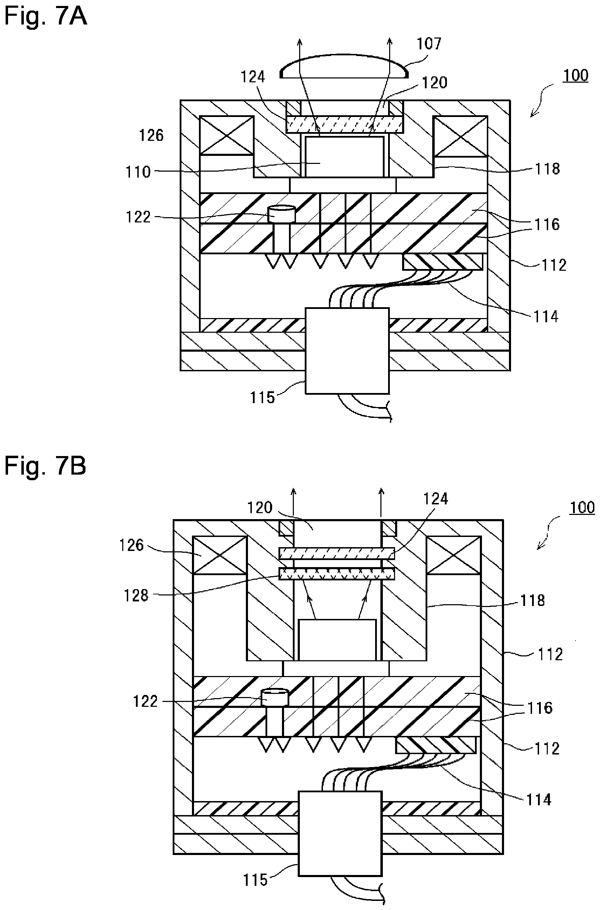

Figure 7A illustrates a preferred configuration example of the reference beam source 100. This reference beam source 100 has an infrared ray emitting element 110 enabling black body radiation. This infrared ray emitting element 110 is composed of a light-emitting diode having surface layer composed of a crystalline body, and a black body layer (black body film) is deposited and formed on a surface of the crystalline body. A surface of the black body layer is preferably formed in a dendritic shape, and radiated beams are emitted in multiple directions from the dendritic surface. As a result, there is no uneven distribution in the radial direction, a highly reliable reference beam can be obtained, and heat generation (light emission) in an extremely short time is possible. In addition, the surface area of the dendritic surface is large and the heat dissipation is high, and therefore the diffusion speed of heat is fast when the light emission is stopped, and it can be used as a stable black body light source without output reduction even after repeated use. In this reference beam source 100, reference numeral 107 denotes a collimating lens, reference numeral 112 denotes a housing, reference numeral 114 denotes internal electrical wiring, reference numeral 115 denotes a connector, reference numeral 116 denotes a circuit board, reference numeral 118 denotes a cylindrical holding part, reference numeral 120 denotes an opening, reference numeral 122 denotes a thermistor, reference numeral 124 denotes protective glass, and reference numeral 126 denotes a permanent magnet (for detachably fixing the housing 112 to the unit 30).

In a reference beam source 100 in Figure 7B, the cylindrical holding part 118 is extended axially and a diffuser plate 128 is disposed inside the cylindrical holding part 118. Configuration other than the above is the same as those in Figure 7A. A beam (reference beam) emitted from a light emitting surface of an infrared ray emitting element 110 at a constant flare angle passes through the diffuser plate 128 and goes out to become a radiated beam with high directivity. Therefore, a collimating lens (107) becomes unnecessary.

Referring again to Figure 1, the reference beam source power supply 102 can arbitrarily control power and an oscillation mode (continuous wave or repetitive pulse) of the reference beam generated by the reference beam source 100 through variable excitation power supplied to the reference beam source 100. The optical measuring instrument 104 may be a well-known power meter or actinometer, measures the power or luminous flux of beams received by a beam receiver 104a, and numerically displays a measured value on a display 104c of a main body 104b.

The optical path switching unit 105 switches in order to select the first optical path K1 that optically connects the processing point Q of the workpiece W and the optical sensor 50, a second optical path K2 that optically connects the reference beam source 100 and the optical sensor 50, or a third optical path K3 that optically connects the reference beam source 100 and the beam receiver 104a of the optical measuring instrument 104.

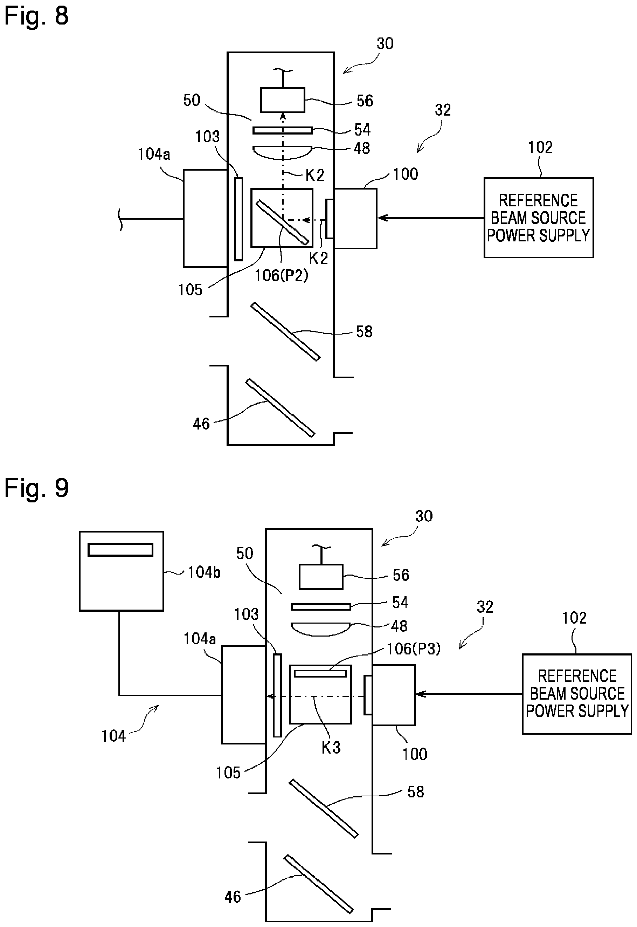

In order to realize this switching function, the optical path switching unit 105 has one (or more) folding mirror(s) 106 capable of moving among a first position P1 (Figure 1) for retreating from the first optical path K1 in order to select the first optical path K1, and a second position P2 (Figure 8) for blocking the first optical path K1 and reflecting the reference beam from the reference beam source 100 toward the optical sensor 50 in order to select the second optical path K2, and a third position P3 (Figure 9) for retreating from the third optical path K3 in order to select the third optical path K3.

In this embodiment, the optical path switching unit 105 is provided between the dichroic mirror 58 and the condenser lens 48 in the housing of the sensor unit 30. The reference beam source 100 and the beam receiver 104a of the optical measuring instrument 104 are mounted on a side wall of the housing of the sensor unit 30 adjacent to the optical path switching unit 105. An optical filter 103 having the same or similar wavelength selection characteristic as the band pass filter 54 of the optical sensor 50 may be disposed in front of the beam receiver 104a of the optical measuring instrument 104. The reference beam source power supply 102 and the main body 104b of the optical measuring instrument 104 are provided outside the sensor unit 30.

Now, operation of the calibration unit 32 will be described. The calibration unit 32 has three modes that are selected according to an operation status of the laser processing device and the determination of an on-site person. That is, there are a first mode in which interference with the light reception and photoelectric conversion of the optical sensor 50 during monitoring of laser processing does not occur, a second mode in which the optical sensor 50 is calibrated by use of the reference beam source 100, and a third mode in which the reference beam source 100 is calibrated by use of the optical measuring instrument 104.

In the first mode, as described above, the folding mirror 106 of the optical path switching unit 105 is switched to the first position P1 illustrated in Figure 1. The reference beam source 100, the reference beam source power supply 102 and the optical measuring instrument 104 are turned off. Each unit operates on the device main body side, especially in the sensor signal processing unit 26, the control unit 14 and the operation panel 22, waveform display processing to the sensor output signal CS is performed as described above.

The second mode is selected (performed) from time to time or periodically during laser processing monitoring. In this mode, when the folding mirror 106 of the optical path switching unit 105 is switched to the second position P2 illustrated in Figure 8, and the reference beam source power supply 102 is turned on, and a reference beam is generated by the reference beam source 100. At this time, the reference beam source power supply 102 supplies, to the reference beam source 100, excitation power at a volume position adjusted or updated in the third mode prior to this second mode.

In the second mode, each unit except for the laser oscillator 10 and the laser power supply 12 is operated even on the device main body side. However, the sensor signal processing unit 26, the control unit 14 and the operation panel 22 are switched to have not the function of waveform display processing in the first mode for the sensor output signal CS sent from the sensor unit 30, but the calibration function for displaying the measured value (measurement count value) of the power or the luminous flux numerically and performing gain adjustment.

In the second mode, the reference beam emitted from the reference beam source 100 passes through the second optical path K2 to be guided to the optical sensor 50. More specifically, the reference beam emitted horizontally from the reference beam source 100 is folded vertically upward by the folding mirror 106 of the optical path switching unit 105. Then, the reference beam folded vertically upward is incident on the band pass filter 54 of the optical sensor 50 via the condenser lens 48, and the beam in a specific wavelength band that passes through this filter 54 is incident on the photodiode 56. The photodiode 56 photoelectrically converts the wavelength selected from the received reference beam and outputs an analog sensor output signal CS. This sensor output signal CS is amplified in the latter amplification and output circuit 70 in the same manner as above, and then sent to the sensor signal processing unit 26 on the device main body side via the electric cable 18.

In the sensor signal processing unit 26, the sensor signal processing unit 26 calculates the light intensity of the reference beam photoelectrically converted by the optical sensor 50 or a measured value, namely, a measurement count value of a luminous flux of the reference beam based on the sensor output signal CS converted into a digital signal by the A/D converter 82, and stores the calculated value in the data memory 88. The control unit 14 reads the measurement count value from the data memory 88 and displays the measurement count value on the display of display unit 22a of operation panel 22.

An on-site person who performs the second mode reads the measurement count value displayed on the monitor screen (maintenance screen) of display unit 22a. The on-site person performs gain adjustment or offset adjustment to the output of the optical sensor 50 by input operation on the operation panel 22 such that the measurement count value coincides with a predetermined reference count value.

The third mode is selected (performed) from time to time or periodically during laser processing monitoring, and selected (performed) immediately before the second mode. In this mode, the folding mirror 106 of the optical path switching unit 105 is switched to the third position P3 illustrated in Figure 9, and the reference beam source 100, the reference beam source power supply 102 and the optical measuring instrument 104 are turned on. All units on the device main body are each kept in an off state. The reference beam emitted from the reference beam source 100 passes through the third optical path K3 and is incident on the beam receiver 104a of the optical measuring instrument 104. At this time, the reference beam source power supply 102 supplies, to the reference beam source 100, excitation power at a volume position adjusted or updated in the previous third mode prior.

An on-site person who performs the third mode reads the measured value of the reference beam displayed on the display 104c of the optical measuring instrument 104, and checks whether or not the measured value coincides with an absolute reference value preset as the output of the optical sensor 50. If not, the on-site person adjusts (updates) the volume position of the reference beam source power supply 102 such that the measured value and the absolute reference value coincide with each other. Thus, the light intensity of the reference beam emitted from the reference beam source 100 is calibrated to the absolute reference value via the optical measuring instrument 104. In addition, the measurement accuracy of the normal optical measuring instrument 104 is guaranteed by separate calibration management.

The reference beam source 100 is composed of a semiconductor element such as a light-emitting diode as described above, and the electrical-to-optical conversion characteristics inevitably change over time or fluctuate according to an environmental condition. Therefore, when the constant excitation power is regularly supplied to the reference beam source 100 from the reference beam source power supply 102, the light intensity of the reference beam emitted from the reference beam source 100 changes undesirably and irregularly. According to the calibration unit 32 of this embodiment, it is possible to correct change and fluctuation in the electrical-to-optical conversion characteristic of the reference beam source 100 at any time or frequently by the third mode. Therefore, in the second mode (calibration of the optical sensor 50), a reference beam having higher accuracy than the reference beam source 100 can always be given to the optical sensor 50.

As described above, the laser processing monitor unit 24 uses the reference beam source 100 equipped in the device for calibration of the optical sensor 50 incorporated into the sensor unit 30, and further calibrates the reference beam source 100 with the optical measuring instrument 104 equipped in the device. In this laser processing monitor unit 24, even when the electrical-to-optical conversion characteristic of the reference beam source 100 changes over time or fluctuates due to an environmental condition, it is possible to correct this timely and appropriately. Additionally, even when the photoelectric conversion characteristic of the optical sensor 50 changes over time or fluctuates due to an environmental condition, it is possible to correct this timely and appropriately. Consequently, accuracy, reproducibility and workability of calibration for the optical sensor 50 can be largely improved, and the monitoring performance can be dramatically improved. In addition, the calibration reference value of the optical sensor 50 is the absolute reference value of the optical measuring instrument 104, and therefore it is possible to obtain monitoring performance without any machine difference.

Furthermore, in this embodiment, the optical path switching unit 105 is provided near the optical sensor 50 inside the sensor unit 30, and the reference beam source 100 and the beam receiver 104a of the optical measuring instrument 104 are mounted on the side wall of the housing of the sensor unit 30 adjacent to the optical path switching unit 105. Consequently, without disassembling of the sensor unit 30 or removal of the optical sensor 50, calibration focusing on the photoelectric conversion characteristic of the optical sensor 50 can be performed easily and safely. In addition, at the laser processing site, without exposing the optical sensor 50 and the monitor optical system in the sensor unit 30 to the surrounding dusty environment, the calibration of the optical sensor 50 and the calibration of the reference beam source 100 can be performed frequently in a daily inspection and or a periodic inspection.

### [Preferred Configuration Example of Optical Path Switching Unit]

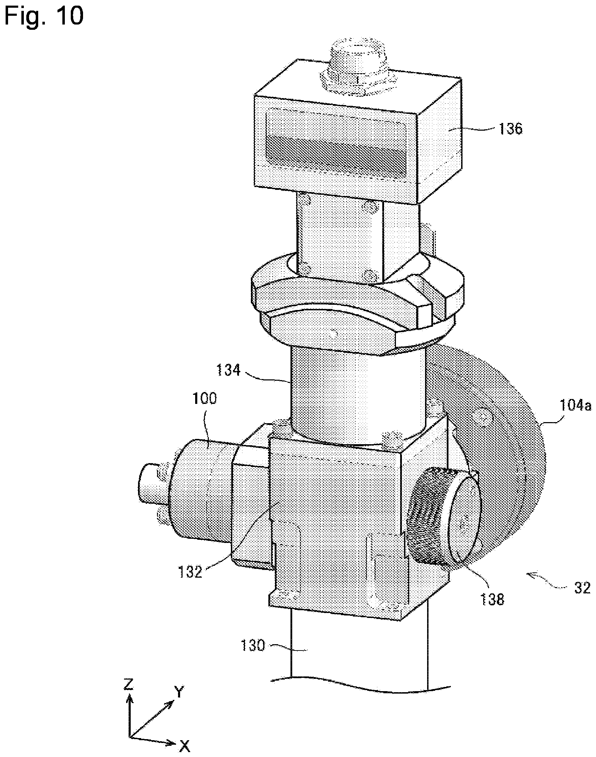

As described above, in the laser processing monitor unit 24, the optical path switching unit 105 is provided together with (preferably near) the optical sensor 50 inside the sensor unit 30. Hereinafter, a preferred configuration example of the optical path switching unit 105 will be described with reference to Figure 10 to Figure 16C.

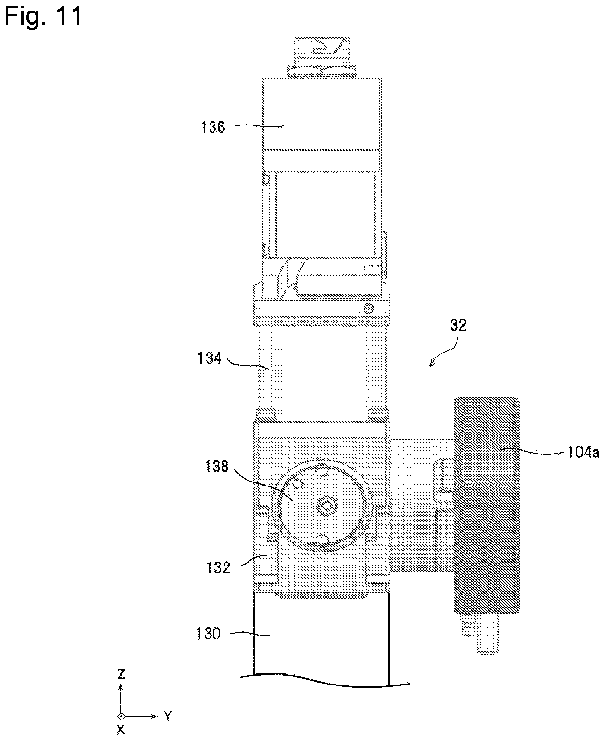

Figure 10 and Figure 11 illustrate an appearance configuration of a principal part of the sensor unit 30. The illustrated housing of the sensor unit 30 is composed of a lower cylindrical part 130, an intermediate square cylindrical part 132, an upper cylindrical part 134 and a sensor box 136 which are connected in a vertically line from a bottom to a top.

The folding mirror 46 and the dichroic mirror 58 (Figure 1) of the monitor optical system are housed in the lower cylindrical part 130. The reference beam source 100 and the beam receiver 104a of the optical measuring instrument 104 are mounted on the side wall of the intermediate square cylindrical part 132, and a rotary knob 138 is rotatably installed. Herein, the reference beam source 100 and the rotary knob 138 are located on opposite side surfaces of the intermediate square cylindrical part 132 facing each other. The beam receiver 104a of the optical measuring instrument 104 is located on a side surface between the reference beam source 100 and the rotary knob 138 in the circumferential direction of the intermediate square cylindrical part 132. The optical path switching unit 105 according to this configuration example is provided in the intermediate square cylindrical part 132. The condenser lens 48 (Figure 1) of the monitor optical system is housed in the upper cylindrical part 134. The optical sensor 50 is housed in the sensor box 136.

Thus, the reference beam source 100 and the beam receiver 104a of the optical measuring instrument 104 are not housed inside the sensor unit 30 but mounted on the side wall from the outside, and the rotary knob 138 of the optical path switching unit 105 is also provided outside the side wall of the sensor unit 30. The providing of the calibration unit 32 does not substantially increase the size (particularly the transvers width) of the internal cavity (optical path) of the sensor unit 30.

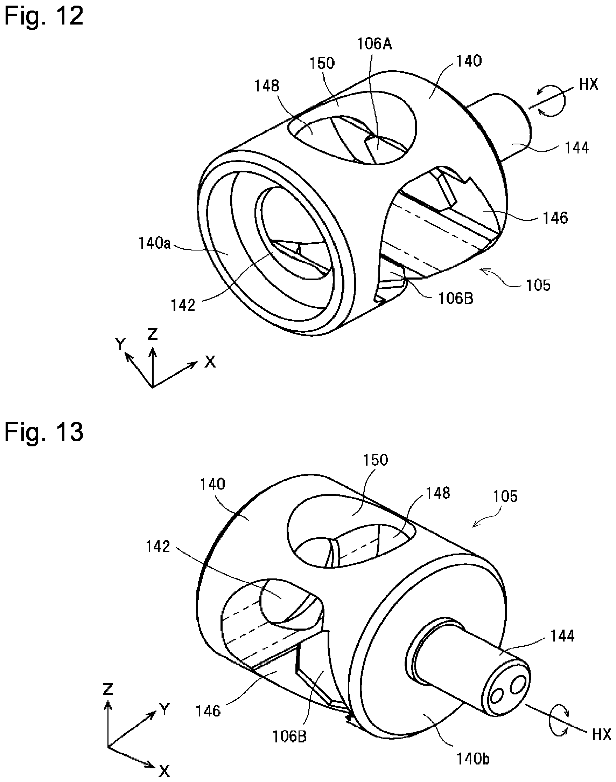

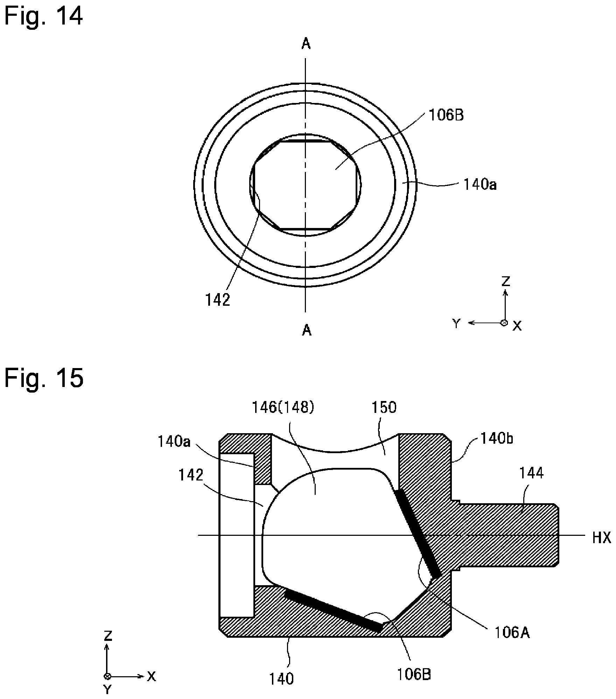

Figure 12 to Figure 15 illustrate a configuration of the optical path switching unit 105 of this embodiment, Figure 12 and Figure 13 are perspective views, Figure 14 is a side view, and Figure 15 is a sectional view taken along the line A-A of Figure 14.

As illustrated in Figure 12 and Figure 13, the optical path switching unit 105 has a cylindrical mirror support 140 and a plurality of mirrors, and has holes facing the mirrors. Specifically, the mirror support 140 extends in the direction perpendicular to the first optical path K1 (X-direction) and is rotatable around the axis HX. An end surface opening 142 is formed in one end surface 140a of the mirror support 140. The end surface opening 142 is mounted so as to face the emission of the reference beam source 100. The end surface 140b on the opposite side is closed, and a rotating shaft 144 protrudes from the center of this end surface 140b on the axis HX (X-direction). The rotary knob 138 is mounted on the tip end of the rotating shaft 144 outside the sensor unit 30.

Three side openings 146, 148 and 150 are formed in a side surface of the mirror support 140 at intervals in the circumferential direction. The first and second side openings 146 and 148 face each other, and the third side opening 150 is located in the middle between both the openings.

Inside the mirror support 140, a first folding mirror 106A is provided inside the end surface 140b facing the end surface opening 142, and a second folding mirror 106B is provided inside a side surface facing the third side opening 150. Herein, the first folding mirror 106A is disposed at a predetermined inclination angle so as to receive a reference beam introduced from the reference beam source 100 through the end surface opening 142 at an oblique incident angle and reflect the received reference beam in the predetermined direction, that is, toward the second folding mirror 106B. On the other hand, the second folding mirror 106B is disposed at a predetermined inclination angle so as to receive the reference beam from the first folding mirror 106A at an oblique incident angle and reflect the reference beam outward through the third side opening 150.

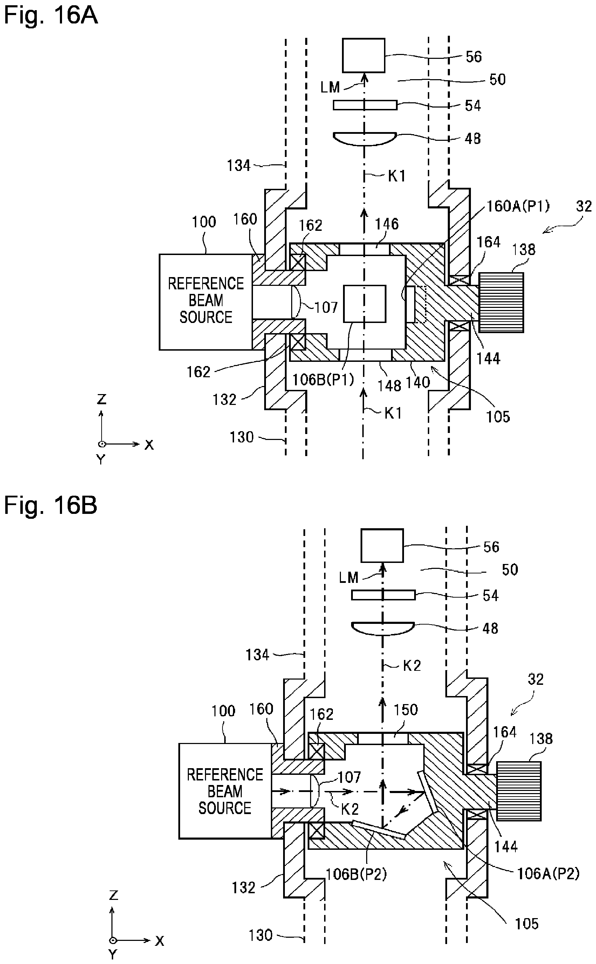

As illustrated in Figure 16A to Figure 16C, the reference beam source 100 is fixed to a side wall of the intermediate square cylindrical part 132 through the cylindrical mounting member 160. A bearing 162 is provided between the mounting member 160 and a tip end of the mirror support 140. On the other hand, a bearing 164 is provided between the rotating shaft 144 of the mirror support 140 and the side wall of the intermediate square cylindrical part 132. When the rotary knob 138 is rotated outside the sensor unit 30, the mirror support 140 rotates around the axis HX while supported by both the bearings 162 and 164 inside the sensor unit 30.

The rotational position of the mirror support 140 is selected in three ways (or two ways) according to the three modes of the calibration unit 32. In the first mode, in order to select the first optical path K1, the rotational position of the mirror support 140 is selected or adjusted such that the first and second side openings 146 and 148 vertically face each other and are located on the first optical path K1.

Figure 16A illustrates positional relation of each unit of the optical path switching unit 105 in the first mode. In this case, the first and second folding mirrors 106A and 106B are set to the first position P1. Herein, the second folding mirror 106B takes the same upright posture as the first folding mirror 106A and retreats beside the first optical path K1.

The beam to be measured propagating inside the lower cylindrical part 130 through the dichroic mirror 58 (Figure 1) enters the mirror support 140 through the side opening 148 on the lower side in the optical path switching unit 105. The beam to be measured that enters the mirror support 140 passes near the first and second folding mirrors 106A and 106B, and passes out of the mirror support 140 through the side opening 146 on the upper side. The beam to be measured that passes through the optical path switching unit 105 as described above propagates inside the upper cylindrical part 134, and is incident on the optical sensor 50 through the condenser lens 48.

In the second mode, in order to select the second optical path K2, the rotational position of the mirror support 140 is selected or adjusted such that the third side opening 150 faces the optical sensor 50.

Figure 16B illustrates positional relation of each unit of the optical path switching unit 105 in the second mode. In this case, the first and second folding mirrors 106A and 106B are set to the second position P2. Herein, the second folding mirror 106B takes the lowest position in the Z-direction and faces the optical sensor 50 directly above the second folding mirror through the third side opening 150. The first folding mirror 106A is interlocked with the rotation of the optical path switching unit 105 and turns obliquely downward to face the reference beam source 100.

When the reference beam emitted from the reference beam source 100 enters the mirror support 140 from the end surface opening 142, the reference beam advances straight and is incident on the first folding mirror 106A in the innermost part at an oblique incident angle, reflects obliquely downward on the first folding mirror 106A to be incident on the second folding mirror 106B at an oblique incident angle. Then, the reference beam incident on the second folding mirror 106B reflects vertically upward on the second folding mirror 106B, and exits from the third side opening 150. The reference beam that exits from the third side opening 150 described above propagates inside the upper cylindrical part 134, and is incident on the optical sensor 50 through the condenser lens 48.

In the third mode, in order to select the third optical path K3, the rotational position of the mirror support 140 is selected or adjusted such that the third side opening 150 faces horizontally (Y-direction) the beam receiver 104a of the optical measuring instrument 104 located just beside the optical path switching unit 105.

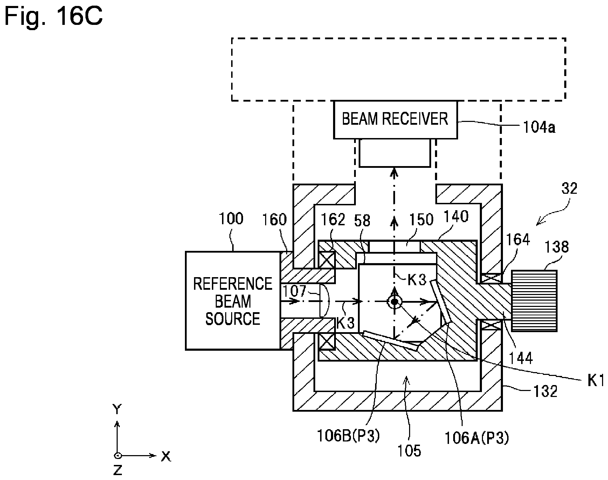

Figure 16C illustrates positional relation of each unit of the optical path switching unit 105 in the third mode. In this case, the first and second folding mirrors 106A and 106B are set to the third position P3. Herein, the second folding mirror 106B has a reflection surface set in the Y-direction and faces the beam receiver 104a of the optical measuring instrument 104 located just beside the optical path switching unit 105 through the third side opening 150. The first folding mirror 106A is interlocked with the rotation of the optical path switching unit 105 and faces the reference beam source 100.

When the reference beam from the reference beam source 100 enters the mirror support 140 through the end surface opening 142, the reference beam advances straight and is incident on the first folding mirror 106A in the front innermost part at an oblique incident angle, reflects obliquely sideways on the first folding mirror 106A to be incident on the second folding mirror 106B at an oblique incident angle. Then, the reference beam incident on the second folding mirror 106B further reflects obliquely sideways (Y-direction) on the second folding mirror 106B, and exits from the third side opening 150. The reference beam thus exits in the horizontal direction (Y-direction) perpendicular to the rotation axis HX and is incident on the beam receiver 104a of the optical measuring instrument 104.

The rotational positions in the first mode and the third mode of the mirror support 140 are different by 180° in the above description, but can be made to be the same (common). That is, when the mirror support 140 is rotated by 180° from the rotational position illustrated in Figure 16A, the rotational position of the mirror support 140 becomes the same as that in Figure 16C. The rotational position (first position P1) in the first mode of the mirror support 140 and the rotational position (third position P3) in the third mode of the mirror support 140 are thus set to the same (common), so that the first mode (monitoring of the laser processing) and the third mode (calibration of the reference beam source 100) can be performed at the same time.

In this case, as illustrated in Figure 16C, the third optical path K3 in the lateral direction from the second folding mirror 106B to the beam receiver 104a of the optical measuring instrument 104, and the longitudinal first optical path K1 passing through the dichroic mirror 58 on the lower side and directed to the optical sensor 50 on the upper side intersect perpendicularly near the center inside the optical path switching unit 105, but do not mutually interfere with each other.

The optical path switching unit 105 of this configuration example is mounted with the folding mirrors 106 (106A and 106B) inside the rotatable cylindrical mirror support 140 having a plurality of the openings on the end surface and the side surface as described above. The rotational position of the mirror support 140 is selected or adjusted, so that the folding mirrors 106 (106A and 106B) are selectively moved to the first, second and third positions P1, P2 and P3. Consequently, it is possible to select either the first, second and third optical paths K1, K2 and K3 alternatively, or either the first and third optical paths (K1, K3) or the second optical path K2. According to such a configuration, it is possible to efficiently and smoothly perform required optical path selection or switching within a limited cavity of the sensor unit 30.

### [Other Embodiment or Modification]

The preferred embodiment of the present invention is described above, but the embodiment described above does not limit the present invention. It is possible for those skilled in the art to make various modifications and changes to the specific embodiments without departing from the technical scope of the present invention as defined in the appended claims.

It is possible to modify or change the arrangement configuration of the optical path switching unit 105, the reference beam source 100 and the beam receiver 104a of the optical measuring instrument 104. That is, either or all of the reference beam source 100, the beam receiver 104a of the optical measuring instrument 104, and the optical path switching unit 105 can be provided in the sensor unit 30 or in the processing head 20 away from the optical sensor 50, or at least one of the reference beam source 100 and the beam receiver 104a of the optical measuring instrument 104 can be detachably mounted on the sensor unit 30.

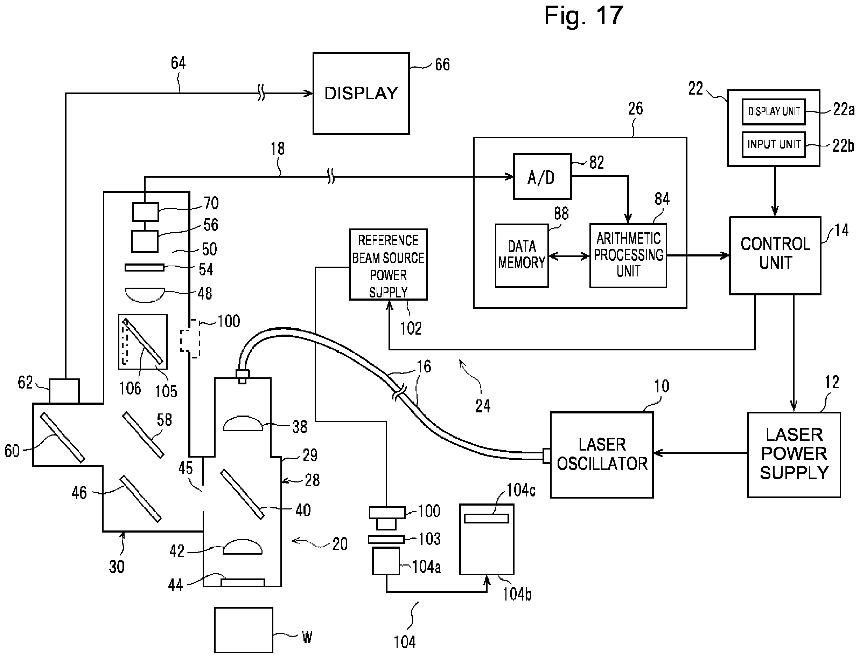

Furthermore, as illustrated in Figure 17 and not being part of the scope of protection conferred by the laser processing device defined in claim 1, the reference beam source 100 can be detachably mounted on the sensor unit 30, and the beam receiver 104a of the optical measuring instrument 104 can be disposed separately from the sensor unit 30, and the reference beam source 100 can be calibrated outside the sensor unit 30.

Alternatively, in a case where the optical path switching unit 105 of the above preferred configuration example (Figure 10 to Figure 16C) is provided, the third positions P3 of the first and second folding mirrors 106A and 106B in the third mode can also be set to such a position as to be vertically inverted with the second position P2 (that is, the position where the reflection surface of the second folding mirror 106B is directed on the dichroic mirror 58 side directly below the third side opening 150 through the third side opening 150). In this case, the beam receiver 104a of the optical measuring instrument 104 is disposed near the laser emission port of the emission unit 28. Consequently, the third optical path K3 is as follows: the reference beam source 100 → the optical path switching unit 105 -> the dichroic mirror 58 → the folding mirror 46 -> the unit connection opening 45 → the dichroic mirror 40 -> the focusing lens 42 -> the protective glass 44 -> the beam receiver 104a of the optical measuring instrument 104.

In the sensor unit 30, the reference beam source 100 and the beam receiver 104a of the optical measuring instrument 104 can face with the optical path switching unit 105 therebetween, and a single folding mirror 106 of the optical path switching unit 105 can also be enough. In this case, the single folding mirror 106 can be moved between the first position P1 for retreating from the first optical path K1 in order to select the first optical path K1, and the second position P2 for blocking the first optical path K1 at an inclination angle 45° and reflecting the reference beam from the reference beam source 100 toward the optical sensor 50 in order to select the second optical path K2. Furthermore, in this case, the first position P1 of the folding mirror 106 can be set to such a position as to retreat from the third optical path K3, so that the first position P1 and the third position P3 can be common.

In the laser processing device according to the present invention, the sensor unit 30 is integrated with the emission unit 28 and built into the processing head 20. However, in a case not covered by the laser processing device of the present invention as defined in claim 1, the sensor unit 30 can be separated from the emission unit 28 to be used as an independent unit, and can be disposed near the processing head 20 or the emission unit 28 so as to be directed toward the workpiece W.

When the sensor unit 30 is thus used as the independent unit, an entrance window is provided in the front stage (unit end surface) of the monitor optical system of the sensor unit 30 so as to directly take a beam to be measured generated or reflected near the processing point Q of the workpiece W. Then, in this case, not only the beam receiver 104a of the optical measuring instrument 104 but also the reference beam source 100 can be used outside the sensor unit 30. That is, in the second mode, the emission surface of the reference beam source 100 is applied (directed) to the entrance window of the sensor unit 30 from the outside, the reference beam emitted from the reference beam source 100 is taken from the entrance window into the sensor unit 30, and the taken reference beam can be received in the optical sensor 50 at the innermost part through the monitor optical system on the inner side. Consequently, it is possible to omit the optical path switching unit (105) from the sensor unit 30.

In the laser beam processing monitor unit 24, the beam to be measured is an infrared ray emitted from the vicinity of the processing point Q of the workpiece W. However, the beam to be measured can be a plasma beam emitted from the vicinity of the processing point Q of the workpiece W, a reflected beam from the vicinity of the processing point Q (reflected laser beam for processing) or a visible ray. Therefore, the reference beam source 100 is not limited to a black body radiated beam source, and various light-emitting diodes or semiconductor lasers with radiation characteristics according to the wavelength band of a beam to be measured can be used. In this case, a band pass filter with a wavelength selection characteristic according to the radiation characteristic of the reference beam source to be used or the wavelength of a beam to be measured, or an optical filter can be provided on the second optical path K2 that optically connects the reference beam source 100 and the optical sensor 50.

The laser processing monitoring method or device of the present invention is not limited to application to a laser processing device that performs laser welding, and a laser processing device that performs other laser processing, for example, laser cutting, laser brazing, laser hardening, laser surface modification, or the like can be applied.

## Claims

1. A laser processing device comprising:
a laser oscillation unit (10) configured to oscillate and output a laser beam (LB) for laser processing;
a processing head (20) optically connected to the laser oscillation unit via an optical fiber cable, and configured to focally irradiate a processing point of a workpiece (W) with the laser beam (LB) from the laser oscillation unit; and
a laser processing monitoring device (24) for photoelectrically converting a predetermined beam to be measured by an optical sensor (50) disposed in the processing head (20) or in proximity to the processing head (20) to acquire a sensor output signal representing light intensity of the beam to be measured, and monitoring the laser processing based on the sensor output signal, during irradiation to the workpiece (W) with the laser beam (LB) for laser processing by the processing head (20), the predetermined beam to be measured being generated or reflected in a vicinity of a processing point of the workpiece (W),
and being **characterised by**:
the laser processing monitoring device (24) comprising:
a reference beam source (100) provided in the processing head (20), and configured to generate a reference beam for calibrating the optical sensor (50);
a reference beam source power supply unit (102) configured to supply, to the reference beam source (100), adjustable power for generating the reference beam; and
an optical measuring instrument (104) having a beam receiver (104a) for receiving the reference beam from the reference beam source (100) in order to calibrate the reference beam source (100), and configured to measure light intensity of the received reference beam or a predetermined physical quantity equivalent to the light intensity.

2. The laser processing device according to claim 1, further comprising
a sensor unit (30) incorporating the optical sensor (50), and built into the processing head (20), or disposed in proximity to the processing head (20), wherein
at least one of the reference beam source (100) and the beam receiver (104a) of the optical measuring instrument (104) is mounted on the sensor unit (30).

3. The laser processing device according to claim 2, wherein
an optical path switching unit (105) for selecting a first optical path (K1) optically connecting the processing point of the workpiece (W) and the optical sensor (50), a second optical path (K2) optically connecting the reference beam source (100) and the optical sensor (50), or a third optical path (K3) optically connecting the reference beam source (100) and the beam receiver (104a) of the optical measuring instrument (104) is provided inside the sensor unit (30).

4. The laser processing device according to claim 3, wherein
an optical filter (103) for selecting a predetermined wavelength band including a wavelength of the beam to be measured and allowing the beam in the predetermined wavelength band to pass is provided on the second optical path (K2).

5. The laser processing device according to claim 3 or 4, wherein
the processing head (20) has an emission unit (28) integrally or detachably connected to the sensor unit (30) through a unit connection opening (45),
a first optical system configured to irradiate the processing point of the workpiece (W) with the laser beam (LB), and separate the beam to be measured from the vicinity of the processing point from the laser beam (LB) to allow the separated beam to be measured to pass through the unit connection opening (45) is provided in the emission unit (28), and
a second optical system for guiding, to the optical sensor (50), the beam to be measured which enters from the emission unit (28) through the unit connection opening (45) is provided in the sensor unit (30).

6. The laser processing device according to claim 5, wherein
the optical path switching unit (105) is provided in the second optical system or in proximity to the optical sensor (50) with respect to the second optical system inside the sensor unit (30), and
the reference beam source (100) and the beam receiver (104a) of the optical measuring instrument (104) is provided near the optical path switching unit (105).

7. The laser processing device according to any one of claims 3 to 6, wherein
the optical path switching unit (105) has:
a cylindrical mirror support (140) rotatable around a first axis intersecting with the first optical path (K1);
an end surface opening (142) formed in a first end surface of the mirror support (140) in order to introduce the reference beam from the reference beam source (100);
first and second side openings (146, 148) formed in a side surface of the mirror support (140) so as to face each other;
a third side opening (150) formed in the side surface of the mirror support (140) between the first side opening (146) and the second side opening (148) in a circumferential direction;
a first folding mirror (106A) disposed on an inner side of a second end surface of the mirror support (140) so as to face the end surface opening (142), and configured to receive, at an oblique incident angle, the reference beam introduced from the reference beam source (100) through the end surface opening (142), and reflect the reference beam in a predetermined direction; and
a second folding mirror (106B) disposed on the inner side of the side surface of the mirror support (140) so as to face the third side opening (150), and configured to receive the reference beam from the first folding mirror (106A) at an oblique incident angle and reflect the reference beam outward through the third side opening (150),
when the first optical path (K1) is selected, a rotational position of the mirror support (140) is selected or adjusted such that the first and second side openings (146, 148) face the optical sensor (50),
when the second optical path (K2) is selected, the rotational position of the mirror support (140) is selected or adjusted such that the third side opening (150) faces the optical sensor (50), and
when the third optical path (K3) is selected, the rotational position of the mirror support (140) is selected or adjusted such that the third side opening (150) faces the beam receiver (104a) of the optical measuring instrument (104).

8. The laser processing device according to claim 7, wherein
the reference beam source (100) is mounted on a side wall of the sensor unit (30) so as to face the end surface opening (142) of the mirror support (140), and
the beam receiver (104a) of the optical measuring instrument (104) is mounted on the side wall of the sensor unit (30) so as to face a side surface of the mirror support (140).

9. The laser processing device according to claim 7 or 8, wherein
a rotary knob is connected to a rotating shaft that protrudes from the second end surface of the mirror support (140).

10. The laser processing device according to any one of claims 3 to 6, wherein
the optical path switching unit (105) has one or more folding mirrors capable of moving between a first position (P1) for retreating from the first optical path (K1) in order to select the first optical path (K1), and a second position (P2) for blocking the first optical path (K1) and reflecting the reference beam from the reference beam source (100) toward the optical sensor (50) in order to select the second optical path (K2).

11. The laser processing device according to claim 10, wherein
the optical path switching unit (105) moves the folding mirror to the first position (P1) in order to select the third optical path (K3).

12. The laser processing device according to any one of claims 3 to 6, wherein
the optical path switching unit (105) has one or more folding mirrors capable of moving among a first position (P1) for retreating from the first optical path (K1) in order to select the first optical path (K1), and a second position (P2) for blocking the first optical path (K1) and reflecting the reference beam from the reference beam source (100) toward the optical sensor (50) in order to select the second optical path (K2), and a third position (P3) for retreating from the third optical path (K3) in order to select the third optical path (K3).

13. The laser processing device according to any one of claims 1 to 12, wherein
the reference beam source (100) has a light-emitting diode or a semiconductor laser having a radiation characteristic including a wavelength band of the beam to be measured.

14. The laser processing device according to any one of claims 1 to 12, wherein
the reference beam source (100) has a light-emitting diode or a semiconductor laser having a radiation characteristic near a black body.

15. A laser processing monitoring method for photoelectrically converting a beam to be measured by an optical sensor (50) disposed in a processing head (20) or in proximity to the processing head (20) to acquire a sensor output signal representing light intensity of the beam to be measured, and monitoring the laser processing based on the sensor output signal, during irradiation to a workpiece (W) with a laser beam (LB) for laser processing by the processing head (20), the beam to be measured being generated or reflected in a vicinity of a processing point of the workpiece (W), the laser processing monitoring method comprising:
providing the optical sensor (50) in a sensor unit (30) built into the processing head (20), or disposed in proximity to the processing head (20);
and the laser processing monitoring method further comprising:
mounting, on the sensor unit (30), a reference beam source (100) that generates a reference beam for calibrating the optical sensor (50);
setting a first optical path (K1) optically connecting the processing point of the workpiece (W) and the optical sensor (50) inside the sensor unit (30) when the laser processing is performed;
setting a second optical path (K2) optically connecting the reference beam source (100) and the optical sensor (50) inside the sensor unit (30) when the optical sensor (50) is calibrated; and
causing the reference beam emitted from the reference beam source (100) to be incident on a beam receiver (104a) of an optical measuring instrument (104) in order to calibrate the reference beam source (100), and adjusting output of the reference beam source (100) such that a measured value of the optical measuring instrument (104) coincides with a reference value.

16. The laser processing monitoring method according to claim 15, further comprising
mounting the beam receiver (104a) of the optical measuring instrument (104) on the sensor unit (30), and setting a third optical path (K3) optically connecting the reference beam source (100) and the beam receiver (104a) inside the processing head (20) when the reference beam source (100) is calibrated.

17. The laser processing monitoring method according to claim 15, further comprising
detachably mounting the reference beam source (100) on the sensor unit (30), and detaching the reference beam source (100) from the sensor unit (30) to cause the reference beam generated by the reference beam source (100) outside the sensor unit (30) to be incident on the beam receiver (104a) of the optical measuring instrument (104) when the reference beam source (100) is calibrated.

18. The laser processing device according to anyone of claims 1 to 14,
wherein the laser processing monitoring device (24) comprises
a sensor signal processing unit (26) configured to generate digital waveform data for the sensor output signal from the optical sensor (50), and display and output a waveform of the sensor output signal based on the waveform data.

## Patentansprüche

1. Laserbearbeitungs-Vorrichtung, die umfasst:
eine Laseroszillations-Einheit (10), die so ausgeführt ist, dass sie einen Laserstrahl (LB) für Laserbearbeitung erzeugt und ausgibt;
einen Bearbeitungskopf (20), der über ein Lichtleiterkabel optisch mit der Laseroszillations-Einheit verbunden ist und so ausgeführt ist, dass er einen Bearbeitungspunkt eines Werkstücks (W) mit dem Laserstrahl (LB) von der Laseroszillations-Einheit fokal bestrahlt; sowie
eine Vorrichtung (24) zum Überwachen von Laserbearbeitung, die bei Bestrahlung des Werkstücks (W) mit dem Laserstrahl (LB) für Laserbearbeitung durch den Bearbeitungskopf (20) einen vorgegebenen Strahl, der von einem in dem Bearbeitungskopf (20) oder in der Nähe des Bearbeitungskopfes (20) angeordneten optischen Sensor (50) gemessen werden soll, fotoelektrisch umwandelt, um ein Lichtintensität des zu messenden Strahls repräsentierendes Sensorausgangssignal zu erfassen, und die Laserbearbeitung auf Basis des Sensor-Ausgangssignals überwacht, wobei der vorgegebene zu messende Strahl in der Nähe eines Bearbeitungspunktes des Werkstücks (W) erzeugt oder reflektiert wird, und die
**dadurch gekennzeichnet ist, dass**
die Vorrichtung (24) zum Überwachen von Laserbearbeitung umfasst:
eine Bezugsstrahlen-Quelle (100), die in dem Bearbeitungskopf (20) vorhanden und so ausgeführt ist, dass sie einen Bezugsstrahl zum Kalibrieren des optischen Sensors (50) erzeugt;
eine Stromversorgungs-Einheit (102) für die Bezugsstrahlen-Quelle, die so ausgeführt ist, dass sie der Bezugsstrahlen-Quelle (100) einstellbare Energie zum Erzeugen des Bezugsstrahls zuführt; und
ein optisches Messinstrument (104), das eine Strahlen-Empfangseinrichtung (104a) zum Empfangen des Bezugsstrahls von der Bezugsstrahlen-Quelle (100) aufweist, um die Bezugsstrahlen-Quelle (100) zu kalibrieren, und das so ausgeführt ist, dass es Lichtintensität des empfangenen Bezugsstrahls oder eine vorgegebene physikalische Größe äquivalent zu der Lichtintensität misst.

2. Laserbearbeitungs-Vorrichtung nach Anspruch 1, die des Weiteren umfasst:
eine Sensor-Einheit (30), die den optischen Sensor (50) enthält und in den Bearbeitungskopf (20) eingebaut oder in der Nähe des Bearbeitungskopfes (20) angeordnet ist, wobei
die Bezugsstrahlen-Quelle (100) oder/und die Strahlen-Empfangseinrichtung (104a) des optischen Messinstruments (104) an der Sensor-Einheit (30) angebracht ist/sind.

3. Laserbearbeitungs-Vorrichtung nach Anspruch 2, wobei
eine Einheit (105) zum Umschalten eines optischen Weges, die einen ersten optischen Weg (K1), der den Bearbeitungspunkt des Werkstücks (W) und den optischen Sensor (50) optisch verbindet, einen zweiten optischen Weg (K2), der die Bezugsstrahlen-Quelle (100) und den optischen Sensor (50) optisch verbindet, oder einen dritten optischen Weg (K3) auswählt, der die Bezugsstrahlen-Quelle (100) und die Strahlen-Empfangseinrichtung (104a) des optischen Messinstruments (104) optisch verbindet, im Inneren der Sensor-Einheit (30) vorhanden ist.

4. Laserbearbeitungs-Vorrichtung nach Anspruch 3, wobei
ein optisches Filter (103) zum Auswählen eines vorgegebenen Wellenlängenbandes, das eine Wellenlänge des zu messenden Strahls einschließt, und zum Durchlassen des Strahls in dem vorgegebenen Wellenlängenband auf dem zweiten optischen Weg (K2) vorhanden ist.

5. Laserbearbeitungs-Vorrichtung nach Anspruch 3 oder 4, wobei
der Bearbeitungskopf (20) eine Emissions-Einheit (28) aufweist, die mit der Sensor-Einheit (30) über eine Einzel-Verbindungsöffnung (45) integral oder lösbar verbunden ist,
ein erstes optisches System, das so ausgeführt ist, dass es den Bearbeitungspunkt des Werkstücks (W) mit dem Laserstrahl (LB) bestrahlt und den zu messenden Strahl in der Nähe des Bearbeitungspunktes von dem Laserstrahl (LB) trennt, um den getrennten zu messenden Strahl durch die Einzel-Verbindungsöffnung (45) durchzulassen, in der Emissions-Einheit (28) vorhanden ist, und
ein zweites optisches System, mit dem der zu messende Strahl, der von der Emissions-Einheit (28) über die Einzel-Verbindungsöffnung (45) eintritt, zu dem optischen Sensor (50) geleitet wird, in der Sensor-Einheit (30) vorhanden ist.

6. Laserbearbeitungs-Vorrichtung nach Anspruch 5, wobei
die Einheit (105) zum Umschalten eines optischen Weges in dem zweiten optischen System oder in der Nähe des optischen Sensors (50) in Bezug auf das zweite optische System im Inneren der Sensor-Einheit (30) vorhanden ist, und
die Bezugsstrahlen-Quelle (100) sowie die Strahlen-Empfangseinrichtung (104a) des optischen Messinstruments (104) in der Nähe der Einheit (105) zum Umschalten eines optischen Weges angeordnet sind.

7. Laserbearbeitungs-Vorrichtung nach einem der Ansprüche 3 bis 6, wobei
die Einheit (105) zum Umschalten eines optischen Weges aufweist:
einen zylindrischen Spiegelträger (140), der um eine erste Achse herum gedreht werden kann, die sich mit dem ersten optischen Weg (K1) schneidet;
eine Endflächen-Öffnung (142), die in einer ersten Endfläche des Spiegelträgers (140) ausgebildet ist, um den Bezugsstrahl von der Bezugsstrahlen-Quelle (100) einzuleiten;
eine erste sowie eine zweite Seiten-Öffnung (146, 148), die in einer Seitenfläche des Spiegelträgers (140) so ausgebildet sind, dass sie einander zugewandt sind;
eine dritte Seiten-Öffnung (150), die in der Seitenfläche des Spiegelträgers (140) zwischen der ersten Seiten-Öffnung (146) und der zweiten Seiten-Öffnung (148) in einer Umfangsrichtung ausgebildet ist;
einen ersten Klappspiegel (106A), der an einer Innenseite einer zweiten Endfläche des Spiegelträgers (140) so angeordnet ist, dass er der Endflächen-Öffnung (142) zugewandt ist, und der so ausgeführt ist, dass er den von der Bezugsstrahlen-Quelle (100) über die Endflächen-Öffnung (142) eingeleiteten Bezugsstrahl in einem schrägen Einfallswinkel empfängt und den Bezugsstrahl in einer vorgegebenen Richtung reflektiert; sowie
einen zweiten Klappspiegel (106B), der an der Innenseite der Seitenfläche des Spiegelträgers (140) so angeordnet ist, dass er der dritten Seiten-Öffnung (150) zugewandt ist, und der so ausgeführt ist, dass er den Bezugsstrahl von dem ersten Klappspiegel (106A) in einem schrägen Einfallswinkel empfängt und den Bezugsstrahl über die dritte Seiten-Öffnung (150) nach außen reflektiert,
wobei, wenn der erste optische Weg (K1) ausgewählt wird, eine Drehposition des Spiegelträgers (140) so ausgewählt oder eingestellt wird, dass die erste und die zweite Seiten-Öffnung (146, 148) dem optischen Sensor (50) zugewandt sind,
wenn der zweite optische Weg (K2) ausgewählt wird, die Drehposition des Spiegelträgers (140) so ausgewählt oder eingestellt wird, dass die dritte Seiten-Öffnung (150) dem optischen Sensor (50) zugewandt ist, und
wenn der dritte optische Weg (K3) ausgewählt wird, die Drehposition des Spiegelträgers (140) so ausgewählt oder eingestellt wird, dass die dritte Seiten-Öffnung (150) der Strahl-Empfangseinrichtung (104a) des optischen Messinstruments (104) zugewandt ist.

8. Laserbearbeitungs-Vorrichtung nach Anspruch 7, wobei
die Bezugsstrahlen-Quelle (100) an einer Seitenwand der Sensor-Einheit (30) so angebracht ist, dass sie der Endflächen-Öffnung (142) des Spiegelträgers (140) zugewandt ist, und
die Strahlen-Empfangseinrichtung (104a) des optischen Messinstruments (104) an der Seitenwand der Sensor-Einheit (30) so angebracht ist, dass sie einer Seitenfläche des Spiegelträgers (140) zugewandt ist.

9. Laserbearbeitungs-Vorrichtung nach Anspruch 7 oder 8, wobei
ein Drehknopf mit einer Drehwelle verbunden ist, die von der zweiten Endfläche des Spiegelträgers (140) vorsteht.

10. Laserbearbeitungs-Vorrichtung nach einem der Ansprüche 3 bis 6, wobei
die Einheit (105) zum Umschalten eines optischen Weges einen oder mehrere Klappspiegel aufweist, der/die in der Lage ist/sind, sich zwischen einer ersten Position (P1) zum Zurückziehen aus dem ersten optischen Weg (K1) und damit Auswählen des ersten optischen Weges (K1) und einer zweiten Position (P2) zum Blockieren des ersten optischen Weges (K1) sowie Reflektieren des Bezugsstrahls von der Bezugsstrahlen-Quelle (100) in Richtung des optischen Sensors (50) und damit Auswählen des zweiten optischen Weges (K2) zu bewegen.

11. Laserbearbeitungs-Vorrichtung nach Anspruch 10, wobei
die Einheit (105) zum Umschalten eines optischen Weges den Klappspiegel an die erste Position (P1) bewegt, um den dritten optischen Weg (K3) auszuwählen.

12. Laserbearbeitungs-Vorrichtung nach einem der Ansprüche 3 bis 6, wobei
die Einheit (105) zum Umschalten eines optischen Weges einen oder mehrere Klappspiegel aufweist, der/die in der Lage ist/sind, sich zwischen einer ersten Position (P1) zum Zurückziehen aus dem ersten optischen Weg (K1) und damit Auswählen des ersten optischen Weges (K1) und einer zweiten Position (P2) zum Blockieren des ersten optischen Weges (K1) sowie Reflektieren des Bezugsstrahls von der Bezugsstrahlen-Quelle (100) in Richtung des optischen Sensors (50) und damit Auswählen des zweiten optischen Weges (K2) sowie einer dritten Position (P3) zum Zurückziehen aus dem dritten optischen Weg (K3) und damit Auswählen des dritten optischen Weges (K3) zu bewegen.

13. Laserbearbeitungs-Vorrichtung nach einem der Ansprüche 1 bis 12, wobei
die Bezugsstrahlen-Quelle (100) eine Leuchtdiode oder einen Halbleiterlaser mit einer Strahlungscharakteristik aufweist, die ein Wellenlängenband des zu messenden Strahls einschließt.

14. Laserbearbeitungs-Vorrichtung nach einem der Ansprüche 1 bis 12, wobei
die Bezugsstrahlen-Quelle (100) eine Leuchtdiode oder einen Halbleiterlaser mit einer Strahlungscharakteristik nahe an einem schwarzen Körper aufweist.

15. Verfahren zum Überwachen von Laserbearbeitung, mit dem ein Strahl, der von einem optischen Sensor (50) gemessen werden soll, der in einem Bearbeitungskopf (20) oder in der Nähe des Bearbeitungskopfes (20) angeordnet ist, bei Bestrahlung eines Werkstücks (W) mit einem Laserstrahl (LB) für Laserbearbeitung mittels des Bearbeitungskopfes (20) fotoelektrisch umgewandelt wird, um ein Lichtintensität des zu messenden Strahls repräsentierendes Sensor-Ausgangssignal zu erfassen, und die Laserbearbeitung auf Basis des Sensor-Ausgangssignals überwacht wird, wobei der zu messende Strahl in der Nähe eines Bearbeitungspunktes des Werkstücks (W) erzeugt oder reflektiert wird und das Verfahren zum Überwachen von Laserbearbeitung umfasst:
Bereitstellen des optischen Sensors (50) in einer Sensor-Einheit (30), die in den Bearbeitungskopf (20) eingebaut ist, oder in der Nähe des Bearbeitungskopfes (20) angeordnet ist;
und das Verfahren zum Überwachen von Laserbearbeitung des Weiteren umfasst:
Anbringen einer Bezugsstrahlen-Quelle (100), die einen Bezugsstrahl zum Kalibrieren des optischen Sensors (50) erzeugt, an der Sensor-Einheit (30),
Festlegen eines ersten optischen Weges (K1), der den Bearbeitungspunkt des Werkstücks (W) und den optischen Sensor (50) optisch verbindet, im Inneren der Sensor-Einheit (30), wenn die Laserbearbeitung durchgeführt wird;
Festlegen eines zweiten optischen Weges (K2), der die Bezugsstrahlen-Quelle (100) und den optischen Sensor (50) optisch verbindet, im Inneren der Sensor-Einheit (30), wenn der optische Sensor (50) kalibriert wird; und
Veranlassen, dass der von der Bezugsstrahlen-Quelle (100) emittierte Bezugsstrahl auf eine Strahlen-Empfangseinrichtung (104a) eines optischen Messinstruments (104) auftrifft, um die Bezugsstrahlen-Quelle (100) zu kalibrieren, und Einstellen von Ausgang der Bezugsstrahlen-Quelle (100), so dass ein Messwert des optischen Messinstruments (104) mit einem Bezugswert übereinstimmt.

16. Verfahren zum Überwachen von Laserbearbeitung nach Anspruch 15, das des Weiteren umfasst:
Anbringen der Strahlen-Empfangseinrichtung (104a) des optischen Messinstruments (104) an der Sensor-Einheit (30) und Festlegen eines dritten optischen Weges (K3), der die Bezugsstrahlen-Quelle (100) und die Strahlen-Empfangseinrichtung (104a) optisch verbindet, im Inneren des Bearbeitungskopfes (20), wenn die Bezugsstrahlen-Quelle (100) kalibriert wird.

17. Verfahren zum Überwachen von Laserbearbeitung nach Anspruch 15, das des Weiteren umfasst:
lösbares Anbringen der Bezugsstrahlen-Quelle (100) an der Sensor-Einheit (30), und Ablösen der Bezugsstrahlen-Quelle (100) von der Sensor-Einheit (30), um zu veranlassen, dass der von der Bezugsstrahlen-Quelle (100) außerhalb der Sensor-Einheit (30) erzeugte Bezugsstrahl auf die Strahlen-Empfangseinrichtung (104a) des optischen Messinstruments (104) auftrifft, wenn die Bezugsstrahlen-Quelle (100) kalibriert wird.

18. Laserbearbeitungs-Vorrichtung nach einem der Ansprüche 1 bis 14,
wobei die Vorrichtung (24) zum Überwachen von Laserbearbeitung umfasst:
eine Einheit (26) zum Verarbeiten eines Sensor-Signals, die so ausgeführt ist, dass sie digitale Wellenform-Daten für das Sensor-Ausgangssignal von dem optischen Sensor (50) erzeugt, und eine Wellenform des Sensor-Ausgangssignals auf Basis der Wellenform-Daten anzeigt und ausgibt.

## Revendications

1. Dispositif de traitement laser, comprenant :
une unité d'oscillation laser (10) configurée pour osciller et émettre un faisceau laser (LB) de traitement laser ;
une tête de traitement (20) connectée optiquement à l'unité d'oscillation laser via un câble à fibre optique, et configurée pour irradier focalement un point de traitement d'une pièce (W) avec le faisceau laser (LB) provenant de l'unité d'oscillation laser ; et
un dispositif de surveillance de traitement laser (24) pour convertir photoélectriquement un faisceau prédéterminé à mesurer par un capteur optique (50) disposé dans la tête de traitement (20) ou à proximité de la tête de traitement (20) afin d'acquérir un signal de sortie de capteur représentant l'intensité lumineuse du faisceau à mesurer, et pour surveiller le traitement laser sur la base du signal de sortie du capteur, durant l'irradiation de la pièce (W) avec le faisceau laser (LB) de traitement laser par la tête de traitement (20), le faisceau prédéterminé à mesurer étant généré ou réfléchi à proximité d'un point de traitement de la pièce (W),
et **caractérisé par le fait que** le dispositif de surveillance de traitement laser (24) comprend :
une source de faisceau de référence (100) pourvue dans la tête de traitement (20) et configurée pour générer un faisceau de référence afin d'étalonner le capteur optique (50) ;
une unité d'alimentation électrique de la source de faisceau de référence (102) configurée pour fournir à la source de faisceau de référence (100) une puissance réglable afin de générer le faisceau de référence ; et
un instrument de mesure optique (104) comportant un récepteur de faisceau (104a) pour recevoir le faisceau de référence provenant de la source de faisceau de référence (100) afin d'étalonner la source de faisceau de référence (100), et configuré pour mesurer l'intensité lumineuse du faisceau de référence reçu ou une grandeur physique prédéterminée équivalente à l'intensité lumineuse.

2. Dispositif de traitement laser selon la revendication 1,
comprenant en outre une unité de capteur (30) incorporant le capteur optique (50) et intégrée dans la tête de traitement (20), ou disposée à proximité de la tête de traitement (20),
dans lequel au moins un élément parmi la source de faisceau de référence (100) et le récepteur de faisceau (104a) de l'instrument de mesure optique (104) est monté sur l'unité de capteur (30).

3. Dispositif de traitement laser selon la revendication 2, dans lequel
une unité de commutation de chemin optique (105), pour sélectionner un premier chemin optique (K1) connectant optiquement le point de traitement de la pièce (W) et le capteur optique (50), un deuxième chemin optique (K2) connectant optiquement la source de faisceau de référence (100) et le capteur optique (50), ou un troisième chemin optique (K3) connectant optiquement la source de faisceau de référence (100) et le récepteur de faisceau (104a) de l'instrument de mesure optique (104), est pourvue à l'intérieur de l'unité de capteur (30).

4. Dispositif de traitement laser selon la revendication 3, dans lequel
un filtre optique (103), destiné à sélectionner une bande de longueur d'onde prédéterminée comprenant une longueur d'onde du faisceau à mesurer et permettant au faisceau dans la bande de longueur d'onde prédéterminée de passer, est pourvu sur le deuxième chemin optique (K2) .

5. Dispositif de traitement laser selon la revendication 3 ou 4, dans lequel
la tête de traitement (20) comporte une unité d'émission (28) connectée de manière intégrée ou détachable à l'unité de capteur (30) par l'intermédiaire d'une ouverture de connexion d'unité (45),
un premier système optique configuré pour irradier le point de traitement de la pièce (W) avec le faisceau laser (LB), et pour séparer le faisceau à mesurer provenant du voisinage du point de traitement, du faisceau laser (LB) afin de permettre au faisceau séparé à mesurer de traverser l'ouverture de connexion d'unité (45), est pourvu dans l'unité d'émission (28), et
un deuxième système optique, pour guider vers le capteur optique (50) le faisceau à mesurer qui entre depuis l'unité d'émission (28) à travers l'ouverture de connexion d'unité (45), est pourvu dans l'unité de capteur (30).

6. Dispositif de traitement laser selon la revendication 5, dans lequel
l'unité de commutation de chemin optique (105) est pourvue dans le deuxième système optique ou à proximité du capteur optique (50) par rapport au deuxième système optique à l'intérieur de l'unité de capteur (30), et
la source de faisceau de référence (100) et le récepteur de faisceau (104a) de l'instrument de mesure optique (104) sont pourvus à proximité de l'unité de commutation de chemin optique (105).

7. Dispositif de traitement laser selon l'une quelconque des revendications 3 à 6, dans lequel
l'unité de commutation de chemin optique (105) comprend :
un support de miroir cylindrique (140) rotatif autour d'un premier axe coupant le premier chemin optique (K1) ;
une ouverture de surface d'extrémité (142) formée dans une première surface d'extrémité du support de miroir (140) afin d'introduire le faisceau de référence provenant de la source de faisceau de référence (100) ;
des première et deuxième ouvertures latérales (146, 148) formées dans une surface latérale du support de miroir (140) de manière à se faire face ;
une troisième ouverture latérale (150) formée dans la surface latérale du support de miroir (140) entre la première ouverture latérale (146) et la deuxième ouverture latérale (148) dans une direction circonférentielle ;
un premier miroir pliant (106A) disposé sur un côté intérieur d'une deuxième surface d'extrémité du support de miroir (140) de manière à faire face à l'ouverture de surface d'extrémité (142), et configuré pour recevoir, selon un angle d'incidence oblique, le faisceau de référence introduit depuis la source de faisceau de référence (100) à travers l'ouverture de surface d'extrémité (142), et pour réfléchir le faisceau de référence dans une direction prédéterminée ; et
un deuxième miroir pliant (106B) disposé sur le côté interne de la surface latérale du support de miroir (140) de manière à faire face à la troisième ouverture latérale (150), et configuré pour recevoir le faisceau de référence provenant du premier miroir pliant (106A) selon un angle d'incidence oblique et pour réfléchir le faisceau de référence vers l'extérieur à travers la troisième ouverture latérale (150),
quand le premier chemin optique (K1) est sélectionné, une position de rotation du support de miroir (140) est sélectionnée ou ajustée de telle sorte que les première et deuxième ouvertures latérales (146, 148) font face au capteur optique (50),
quand le deuxième chemin optique (K2) est sélectionné, la position de rotation du support de miroir (140) est sélectionnée ou ajustée de telle sorte que la troisième ouverture latérale (150) fait face au capteur optique (50), et
quand le troisième chemin optique (K3) est sélectionné, la position de rotation du support de miroir (140) est sélectionnée ou ajustée de telle sorte que la troisième ouverture latérale (150) fait face au récepteur de faisceau (104a) de l'instrument de mesure optique (104).

8. Dispositif de traitement laser selon la revendication 7, dans lequel
la source de faisceau de référence (100) est montée sur une paroi latérale de l'unité de capteur (30) de manière à faire face à l'ouverture de surface d'extrémité (142) du support de miroir (140), et
le récepteur de faisceau (104a) de l'instrument de mesure optique (104) est monté sur la paroi latérale de l'unité de capteur (30) de manière à faire face à une surface latérale du support de miroir (140).

9. Dispositif de traitement laser selon la revendication 7 ou 8, dans lequel
un bouton rotatif est connecté à un arbre rotatif qui ressort depuis la deuxième surface d'extrémité du support de miroir (140).

10. Dispositif de traitement laser selon l'une quelconque des revendications 3 à 6, dans lequel
l'unité de commutation de chemin optique (105) comporte un ou plusieurs miroirs pliants capables de se déplacer entre une première position (P1) pour s'éloigner du premier chemin optique (K1) afin de sélectionner le premier chemin optique (K1), et une deuxième position (P2) pour bloquer le premier chemin optique (K1) et réfléchir le faisceau de référence depuis la source de faisceau de référence (100) vers le capteur optique (50) afin de sélectionner le deuxième chemin optique (K2).

11. Dispositif de traitement laser selon la revendication 10, dans lequel
l'unité de commutation de chemin optique (105) déplace le miroir pliant vers la première position (P1) afin de sélectionner le troisième chemin optique (K3).

12. Dispositif de traitement laser selon l'une quelconque des revendications 3 à 6, dans lequel
l'unité de commutation de chemin optique (105) comporte un ou plusieurs miroirs pliants capables de se déplacer entre une première position (P1) pour s'éloigner du premier chemin optique (K1) afin de sélectionner le premier chemin optique (K1), une deuxième position (P2) pour bloquer le premier chemin optique (K1) et réfléchir le faisceau de référence depuis la source de faisceau de référence (100) vers le capteur optique (50) afin de sélectionner le deuxième chemin optique (K2), et une troisième position (P3) pour s'éloigner du troisième chemin optique (K3) afin de sélectionner le troisième chemin optique (K3).

13. Dispositif de traitement laser selon l'une quelconque des revendications 1 à 12, dans lequel
la source de faisceau de référence (100) comporte une diode électroluminescente ou un laser à semiconducteur ayant une caractéristique de rayonnement comprenant une bande de longueur d'onde du faisceau à mesurer.

14. Dispositif de traitement laser selon l'une quelconque des revendications 1 à 12, dans lequel
la source de faisceau de référence (100) comporte une diode électroluminescente ou un laser à semiconducteur ayant une caractéristique de rayonnement proche de celle d'un corps noir.

15. Procédé de surveillance de traitement laser pour convertir photoélectriquement un faisceau à mesurer par un capteur optique (50) disposé dans une tête de traitement (20) ou à proximité de la tête de traitement (20) afin d'acquérir un signal de sortie de capteur représentant l'intensité lumineuse du faisceau à mesurer, et pour surveiller le traitement laser sur la base du signal de sortie du capteur, durant l'irradiation d'une pièce (W) avec un faisceau laser (LB) pour un traitement laser par la tête de traitement (20), le faisceau à mesurer étant généré ou réfléchi au voisinage d'un point de traitement de la pièce (W), le procédé de surveillance du traitement laser comprenant :
la fourniture du capteur optique (50) dans une unité de capteur (30) intégrée à la tête de traitement (20) ou disposée à proximité de la tête de traitement (20) ;
et le procédé de surveillance de traitement laser comprenant en outre :
le montage, sur l'unité de capteur (30), d'une source de faisceau de référence (100) qui génère un faisceau de référence pour étalonner le capteur optique (50) ;
l'assignation d'un premier chemin optique (K1) connectant optiquement le point de traitement de la pièce (W) et le capteur optique (50) à l'intérieur de l'unité de capteur (30) quand le traitement laser est mis en œuvre ;
l'assignation d'un deuxième chemin optique (K2) connectant optiquement la source de faisceau de référence (100) et le capteur optique (50) à l'intérieur de l'unité de capteur (30) quand le capteur optique (50) est étalonné ; et
le guidage du faisceau de référence émis par la source de faisceau de référence (100) pour qu'il soit incident à un récepteur de faisceau (104a) d'un instrument de mesure optique (104) afin d'étalonner la source de faisceau de référence (100), et l'ajustement de l'émission de la source de faisceau de référence (100) de telle sorte qu'une valeur mesurée de l'instrument de mesure optique (104) coïncide avec une valeur de référence.

16. Procédé de surveillance de traitement laser selon la revendication 15, comprenant en outre
le montage du récepteur de faisceau (104a) de l'instrument de mesure optique (104) sur l'unité de capteur (30), et l'assignation d'un troisième chemin optique (K3) connectant optiquement la source de faisceau de référence (100) et le récepteur de faisceau (104a) à l'intérieur de la tête de traitement (20) quand la source de faisceau de référence (100) est étalonnée.

17. Procédé de surveillance de traitement laser selon la revendication 15, comprenant en outre
le montage de manière détachable de la source de faisceau de référence (100) sur l'unité de capteur (30), et le détachement de la source de faisceau de référence (100) de l'unité de capteur (30) pour guider le faisceau de référence généré par la source de faisceau de référence (100) à l'extérieur de l'unité de capteur (30) afin qu'il soit incident au récepteur de faisceau (104a) de l'instrument de mesure optique (104) quand la source de faisceau de référence (100) est étalonnée.

18. Dispositif de traitement laser selon l'une quelconque des revendications 1 à 14,
dans lequel le dispositif de surveillance de traitement laser (24) comprend
une unité de traitement de signal de capteur (26) configurée pour générer des données de forme d'onde numérique pour le signal de sortie de capteur provenant du capteur optique (50), et pour afficher et émettre une forme d'onde du signal de sortie de capteur sur la base des données de forme d'onde.
